# EUROPEAN PATENT SPECIFICATION

(11) **EP 3 950 755 B1**
(45) Date of publication and mention of the grant of the patent: **03.12.2025**
(21) Application number: 20779001.5
(22) Date of filing: 26.02.2020
(51) Int. Cl.: C08G 8/20, C08G 59/62, C08L 61/12, C08L 63/00, C08K 3/28, C08K 3/38, C09K 5/14

(54) **COMPOSITION AND HEAT CONDUCTING MATERIAL**
ZUSAMMENSETZUNG UND WÄRMELEITENDES MATERIAL
COMPOSITION ET MATÉRIAU CONDUCTEUR DE CHALEUR

(30) Priority: 28.03.2019 JP 2019063925
(43) Date of publication of application: 09.02.2022
(73) Proprietor: FUJIFILM Corporation, Tokyo 106-8620 (JP)
(72) Inventor: HAYASHI, Daisuke, Ashigarakami-gun, Kanagawa 258-8577 (JP); HITOMI, Seiichi, Ashigarakami-gun, Kanagawa 258-8577 (JP); NIORI, Teruki, Ashigarakami-gun, Kanagawa 258-8577 (JP); TAKAHASHI, Keita, Ashigarakami-gun, Kanagawa 258-8577 (JP)
(74) Representative: HGF
(86) International application number: PCT/JP2020/007839
(87) International publication number: WO 2020/195496

(56) References cited:
- EP-A1- 3 418 324
- WO-A1-2017/131006
- JP-A- 2012 025 800
- JP-A- 2017 008 153
- JP-A- H04 174 502
- JP-A- H04 174 502
- US-A1- 2012 251 830

## Description

### BACKGROUND OF THE INVENTION

### 1. Field of the Invention

The present invention relates to a composition and a thermally conductive material.

### 2. Description of the Related Art

In recent years, a power semiconductor device used in various electrical machines such as a personal computer, a general household electric appliance, and an automobile has been rapidly miniaturized. With the miniaturization, it is difficult to control heat generated from the power semiconductor device having a high density.

In order to deal with such a problem, a thermally conductive material, which promotes heat dissipation from the power semiconductor device, is used.

For example, JP2013-216038A discloses a multilayer resin sheet which has a resin layer containing an epoxy resin, a curing agent, and an inorganic filler, and the like (claim 1). As the curing agent, for example, a phenol novolac resin including a compound in which catechols are linked by a methylene chain is proposed (claim 5).
US 2012/251830 A1 discloses a resin composition comprising an epoxy resin monomer having a mesogenic group, a novolac resin containing a compound having a structural unit represented by a general formula (I) and an inorganic filler. EP 3418324 A1 discloses a resin sheet comprising an epoxy resin comprising an epoxy resin oligomer and an epoxy resin monomer, a curing agent and an inorganic filler, wherein a content of the inorganic filler is more than 30% by volume but less than 80% by volume.

### SUMMARY OF THE INVENTION

As a result of an examination of the multilayer resin sheet, which has the resin layer and the like, described in JP2013-216038A, the present inventors have found that there is room for improvement in thermally conductive properties.

Therefore, an object of the present invention is to provide a composition from which a thermally conductive material having excellent thermally conductive properties can be obtained.

Moreover, another object of the present invention is to provide a thermally conductive material formed of the composition.

As a result of a thorough examination conducted to achieve the objects, the present inventors have found that the objects can be achieved by the following configuration.
[1] A composition comprising:
   a phenolic compound represented by General Formula (1);
   an epoxy compound; and
   an inorganic substance;
   wherein the inorganic substance includes at least one of an inorganic nitride selected from boron nitride and an inorganic oxide selected from aluminum oxide.
[2] The composition as described in [1], in which p in General Formula (1) represents an integer of 3 or greater.
[3] The composition as described in [1] or [2], in which a number-average molecular weight of the phenolic compound represented by General Formula (1) is 420 or less based on a polystyrene-equivalent value obtained by gel permeation chromatography measurement.
[4] The composition as described in any one of [1] to [3], in which in a case where at least one of R¹ to R³, which may each be present in a plurality of numbers, in General Formula (1) is the group represented by General Formula (2), the sum of an average value of a plurality of p's and an average value of q's which may be present in a plurality of numbers is 4 or greater.
[5] The composition as described in any one of [1] to [4], in which an epoxy group content of the epoxy compound is 4.0 mmol/g or greater.
[6] The composition as described in any of [1] to [5], in which a content of the inorganic nitride is 50% by mass or greater with respect to a total mass of the inorganic substance.
[7] The composition as described in any one of [1] to [6], further comprising a surface modifier for the inorganic substance.
[8] The composition as described in any one of [1] to [7], further comprising a curing accelerator.
[9] A thermally conductive material which is obtained by curing the composition as described in any one of [1] to [8].

According to the present invention, it is possible to provide a composition for forming a thermally conductive material, from which a thermally conductive material having excellent thermally conductive properties can be obtained.

Moreover, according to the present invention, it is possible to provide a thermally conductive material formed of the composition.

### DESCRIPTION OF THE PREFERRED EMBODIMENTS

Hereinafter, a composition, a composition for forming a thermally conductive material, and a thermally conductive material according to an embodiment of the present invention will be described in detail.

The following configuration requirements are described based on the representative embodiments of the present invention in some cases, but the present invention is not limited to such an embodiment.

Moreover, in the present specification, the numerical range expressed using "to" means a range including the numerical values listed before and after "to" as a lower limit value and an upper limit value.

In the present specification, the solid content of the composition means all components except for a solvent in a case where the composition contains the solvent, and as long as the component is a component other than the solvent, the component is considered to be a solid content even in a case where the component is a liquid component.

Furthermore, in the present specification, an epoxy group is a functional group which is also referred to as an oxiranyl group, and for example, a group, in which two adjacent carbon atoms of a saturated hydrocarbon ring group are bonded to each other through an oxo group (-O-) to form an oxirane ring, and the like are also included in the epoxy group. The epoxy group may or may not have a substituent (a methyl group or the like), if possible.

Furthermore, in the present specification, the description of "(meth)acryloyl group" means "either or both of an acryloyl group and a methacryloyl group". Moreover, the description of "(meth)acrylamide group" means "either or both of an acrylamide group and a methacrylamide group".

In the present specification, an acid anhydride group may be a monovalent group or a divalent group, unless otherwise specified. In a case where the acid anhydride group represents a monovalent group, examples of the monovalent group include a substituent obtained by removing any hydrogen atom from an acid anhydride such as maleic acid anhydride, phthalic acid anhydride, pyromellitic acid anhydride, and trimellitic acid anhydride. Moreover, in a case where the acid anhydride group represents a divalent group, the divalent group means a group represented by *-CO-O-CO-* (* represents a bonding position).

In addition, in the present specification, a substituent or the like, which is not specified whether to be substituted or unsubstituted, may have an additional substituent (for example, a substituent group Y which will be described later), if possible, as long as the desired effect is not impaired. For example, the notation of an "alkyl group" means a substituted or unsubstituted alkyl group (alkyl group which may have a substituent) as long as the desired effect is not impaired.

Moreover, in the present specification, in a case where the description of "may have a substituent" appears, the kind of a substituent, the position of a substituent, and the number of substituents are not particularly limited. Examples of the number of substituents include 1 and 2 or more. Examples of the substituent include a group of monovalent nonmetallic atoms excluding a hydrogen atom, and a group selected from the following substituent group Y is preferable.

In the present specification, examples of a halogen atom include a chlorine atom, a fluorine atom, a bromine atom, and an iodine atom.

Substituent group Y:
a halogen atom (-F, -Br, -Cl, -I, or the like), a hydroxyl group, an amino group, a carboxylic acid group and a conjugated base group thereof, a carboxylic acid anhydride group, a cyanate ester group, an unsaturated polymerizable group, an epoxy group, an oxetanyl group, an aziridinyl group, a thiol group, an isocyanate group, an thioisocyanate group, an aldehyde group, an alkoxy group, an aryloxy group, an alkylthio group, an arylthio group, an alkyldithio group, an aryldithio group, an N-alkylamino group, an N,N-dialkylamino group, an N-arylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, a ureido group, an N'-alkylureido group, an N',N'-dialkylureido group, an N'-arylureido group, an N',N'-diarylureido group, an N'-alkyl-N'-arylureido group, an N-alkylureido group, an N-arylureido group, an N'-alkyl-N-alkylureido group, an N'-alkyl-N-arylureido group, an N',N'-dialkyl-N-alkylureido group, an N',N'-dialkyl-N-arylureido group, an N'-aryl-N-alkylureido group, an N'-aryl-N-arylureido group, an N',N'-diaryl-N-alkylureido group, an N',N'-diaryl-N-arylureido group, an N'-alkyl-N'-aryl-N-alkylureido group, an N'-alkyl-N'-aryl-N-arylureido group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxycarbonylamino group, a formyl group, an acyl group, an alkoxycarbonyl group, an aryloxycarbonyl group, a carbamoyl group, an N-alkylcarbamoyl group, an N,N-dialkylcarbamoyl group, an N-arylcarbamoyl group, an N,N-diarylcarbamoyl group, an N-alkyl-N-arylcarbamoyl group, an alkylsufinyl group, an arylsulfinyl group, an alkylsulfonyl group, an arylsulfonyl group, a sulfo group (-SO₃H) and a conjugated base group thereof, an alkoxysulfonyl group, an aryloxysulfonyl group, a sulfinamoyl group, an N-alkylsulfinamoyl group, an N,N-dialkylsulfinamoyl group, an N-arylsulfinamoyl group, an N,N-diarylsulfinamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-alkyl-N-arylsulfamoyl group, an N-acylsulfamoyl group and a conjugated base group thereof, an N-alkylsulfonylsulfamoyl group (-SO₂NHSO₂(alkyl)) and a conjugated base group thereof, an N-arylsulfonylsulfamoyl group (-SO₂NHSO₂(aryl)) and a conjugated base group thereof, an N-alkylsulfonylcarbamoyl group (-CONHSO₂(alkyl)) and a conjugated base group thereof, an N-arylsulfonylcarbamoyl group (-CONHSO₂(aryl)) and a conjugated base group thereof, an alkoxysilyl group (-Si(Oalkyl)₃), an aryloxysilyl group (-Si(Oaryl)₃), a hydroxysilyl group (-Si(OH)₃) and a conjugated base group thereof, a phosphono group (-PO₃H₂) and a conjugated base group thereof, a dialkylphosphono group (-PO₃(alkyl)₂), a diarylphosphono group (-PO₃(aryl)₂), an alkylarylphosphono group (-PO₃(alkyl)(aryl)), a monoalkylphosphono group (-PO₃H(alkyl)) and a conjugated base group thereof, a monoarylphosphono group (-PO₃H(aryl)) and a conjugated base group thereof, a phosphonooxy group (-OPO₃H₂) and a conjugated base group thereof, a dialkylphosphonooxy group (-OPO₃(alkyl)₂), a diarylphosphonooxy group (-OPO₃(aryl)₂), an alkylarylphosphonooxy group (-OPO₃(alkyl)(aryl)), a monoalkylphosphonooxy group (-OPO₃H(alkyl)) and a conjugated base group thereof, a monoarylphosphonooxy group (-OPO₃H(aryl)) and a conjugated base group thereof, a cyano group, a nitro group, an aryl group, an alkenyl group, an alkynyl group, and an alkyl group. Moreover, each of the aforementioned groups may further have a substituent (for example, one or more groups among the aforementioned respective groups), if possible. For example, an aryl group which may have a substituent is also included as a group selectable from the substituent group Y.

In a case where the group selected from the substituent group Y has a carbon atom, the number of carbon atoms contained in the group is, for example, 1 to 20.

The number of atoms other than a hydrogen atom contained in the group selected from the substituent group Y is, for example, 1 to 30.

Furthermore, these substituents may or may not form a ring by being bonded to each other, if possible, or by being bonded to a group substituted with the substituent. For example, an alkyl group (or an alkyl group moiety in a group, such as an alkoxy group, containing an alkyl group as a partial structure) may be a cyclic alkyl group (cycloalkyl group), or an alkyl group having one or more cyclic structures as a partial structure.

### [Composition]

The composition according to the embodiment of the present invention contains a phenolic compound represented by General Formula (1), an epoxy compound, and an inorganic substance.

The mechanism by which the objects of the present invention are achieved with the composition according to the embodiment of the present invention, which adopts the constitution described above, is not always clear, but the present inventors estimate as follows.

That is, it is estimated that the fact in which the phenolic compound represented by General Formula (1) has a predetermined number or more of phenolic hydroxyl groups and thus a thermal conduction path can be formed at high density in a cured substance (thermally conductive material) in a case where the composition is cured contributes to thermally conductive properties of the obtained thermally conductive material.

**In** addition, a thermally conductive material formed of the composition according to the embodiment of the present invention also has favorable insulating properties and adhesiveness. Hereinafter, in a case where thermally conductive properties, insulating properties, and/or adhesiveness of the obtained thermally conductive material is excellent, it is also said that the effect of the present invention is excellent.

Hereinafter, the components contained in the composition will be described in detail.

### [Phenolic compound represented by General Formula (1)]

General Formula (1) will be shown below.

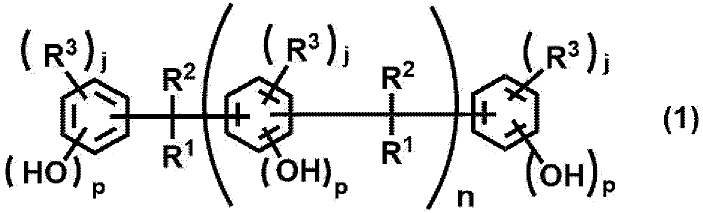

In General Formula (1), R¹ and R² each independently represent a hydrogen atom, an alkyl group which may have a substituent, an aralkyl group which may have a substituent, or a group represented by General Formula (2).

It is preferable that one or both of R¹ and R² are hydrogen atoms. In a case where one of R¹ and R² is a hydrogen atom, the other one is preferably a group represented by General Formula (2).

In the alkyl group which may have a substituent, the number of carbon atoms in the alkyl group is preferably 1 to 20, more preferably 1 to 10, and even more preferably 1 to 6. The alkyl group may be linear, branched, or cyclic. The alkyl group may have a cyclic structure as a partial structure. Examples of the substituent that the alkyl group may have include a group selected from the substituent group Y.

Examples of the aralkyl group which may have a substituent include a group in which the alkyl group has at least one aryl group as a substituent. The alkyl group may have a substituent other than the one aryl group. The one aryl group may have a substituent.

The one aryl group preferably has 6 to 15 membered rings, and may be monocyclic or polycyclic.

The group represented by General Formula (2) is a group shown below.

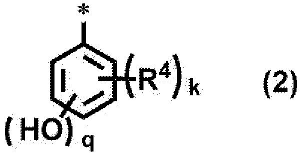

In General Formula (2), * represents a bonding position.

In General Formula (2), R⁴ represents an alkyl group which may have a substituent, an aralkyl group which may have a substituent, or an aryl group which may have a substituent.

In the aryl group which may have a substituent, the aryl group preferably has 6 to 15 membered rings, and may be monocyclic or polycyclic. Examples of the substituent that the aryl group may have include a group selected from the substituent group Y.

The alkyl group which may have a substituent and the aralkyl group which may have a substituent, each of which can be R⁴ of General Formula (2) are, for example, the same as the alkyl group which may have a substituent and the aralkyl group which may have a substituent, each of which can be R¹ and R² of General Formula (1), respectively.

In General Formula (2), k represents an integer of 0 or greater.

k is preferably an integer of 0 to 5, more preferably an integer of 0 to 2, and even more preferably 0.

In General Formula (2), q represents an integer of 0 or greater.

q is preferably an integer of 1 to 5 and more preferably an integer of 1 to 3.

Here, the sum (k + q) of k and p in one group represented by General Formula (2) is an integer of 0 to 5.

As General Formula (2), for example, groups shown below are preferable.

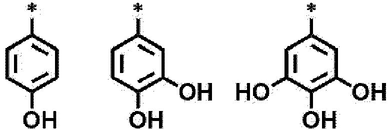

In General Formula (1), R³ represents an alkyl group which may have a substituent, an aralkyl group which may have a substituent, or a group represented by General Formula (2).

The alkyl group which may have a substituent, the aralkyl group which may have a substituent, or the group represented by General Formula (2), each of which can be R³ of General Formula (1) is, for example, the same as the alkyl group which may have a substituent, the aralkyl group which may have a substituent, or the group represented by General Formula (2), each of which can be R¹ and R² of General Formula (1), respectively.

In General Formula (1), n represents an integer of 0 or greater.

n is preferably 0 to 5 and more preferably 0 to 2.

In a case where a mixture of phenolic compounds represented by General Formula (1), which are different only in terms of the value of n is used, an average value of the values of n in the mixture is preferably greater than 0.0 and 5.0 or less and more preferably greater than 0.0 and 2.0 or less.

In General Formula (1), j represents an integer of 0 or greater.

j is preferably an integer of 0 to 4, more preferably an integer of 0 to 2, and even more preferably 0.

In General Formula (1), p represents an integer of 2 or greater.

From the viewpoint that the effect of the present invention is superior, p is preferably an integer of 2 or greater and more preferably an integer of 3 or greater. The upper limit thereof is, for example, an integer of 4 or less.

Here, j + p in -(R³)ⱼ and -(OH)ₚ bonded to the same benzene ring group is an integer of 2 to 4.

In a case where R¹ to R³, which may each be present in a plurality of numbers, in General Formula (1) all represent a group other than a group represented by General Formula (2) in which q is an integer of 1 or greater (that is, a case where none of R¹ to R³, which may each be present in a plurality of numbers, represent the group represented by General Formula (2) in which q is an integer of 1 or greater), p in General Formula (1) is an integer of 3 or greater.

In other words, in a case where in General Formula (1), all of the plurality of j's are 0, and R¹ and R², which may each be present in a plurality of numbers, each independently represent a hydrogen atom, an alkyl group which may have a substituent, an aralkyl group which may have a substituent, or a group represented by General Formula (2) in which q is 0, p is an integer of 3 or greater.

Moreover, in a case where in General Formula (1), at least one among the plurality of j's is an integer of 1 or greater, R¹ and R², which may each be present in a plurality of numbers, each independently represent a hydrogen atom, an alkyl group which may have a substituent, an aralkyl group which may have a substituent, or a group represented by General Formula (2) in which q is 0, and R³, which may be present in a plurality of numbers, represents an alkyl group which may have a substituent, an aralkyl group which may have a substituent, or a group represented by General Formula (2) in which q is 0, p is an integer of 3 or greater.

From the viewpoint that the effect of the present invention is superior, in a case where at least one of R¹, ..., or R³, which may each be present in a plurality of numbers, is a group represented by General Formula (2), the sum (preferably, the sum of a minimum value of a plurality of p's and a minimum value of q's which may be present in a plurality of numbers) of an average value of the plurality of p's and an average value of q's which may be present in a plurality of numbers is preferably 3 or greater and more preferably 4 or greater. The upper limit thereof is, for example, 8 or less.

In General Formula (1), R¹'s, which are present in a plurality of numbers in a case where n is 1 or greater, may be the same as or different from each other. R²'s, which are present in a plurality of numbers in a case where n is 1 or greater, may be the same as or different from each other. A plurality of p's may be the same as or different from each other. A plurality of j's may be the same as or different from each other. A plurality of -(R³)ⱼ's may be the same as or different from each other.

In a case where in General Formula (1), there are a plurality of groups represented by General Formula (2), a plurality of q's may be the same as or different from each other. A plurality of k's may be the same as or different from each other. A plurality of -(R⁴)ₖ's may be the same as or different from each other.

Moreover, in a case where in General Formula (1), there are a plurality of R³'s in one -(R³)ⱼ (that is, a case where j is an integer of 2 or greater), the plurality of R³'s in one -(R³)ⱼ may be the same as or different from each other.

In a case where in General Formula (2), there are a plurality of R⁴'s in one -(R⁴)ₖ (that is, a case where k is 2 or greater), the plurality of R⁴'s in one -(R⁴)ₖ may be the same as or different from each other.

From the viewpoint that the effect of the present invention is superior, a number-average molecular weight of the phenolic compound represented by General Formula (1) is preferably 550 or less and more preferably 420 or less. The lower limit thereof is, for example, 264 or greater.

In a case where the number-average molecular weight is within the above range, a viscosity of the phenolic compound represented by General Formula (1) is low, and thus foam removal from the composition is improved. Accordingly, it is considered that microbubbles, which adversely affect thermally conductive properties, are less likely to occur in a cured substance (thermally conductive material) in a case where the composition is cured, and thus thermally conductive properties of the obtained thermally conductive material are improved.

Furthermore, the number-average molecular weight is a number-average molecular weight based on a polystyrene-equivalent value obtained by gel permeation chromatography (GPC) measurement.

The lower limit value of a hydroxyl group content (preferably, a phenolic hydroxyl group content) of the phenolic compound represented by General Formula (1) is preferably 10.0 mmol/g or greater and more preferably 16.0 mmol/g or greater. The upper limit value thereof is preferably 30.0 mmol/g or less and more preferably 25.0 mmol/g or less.

Moreover, the hydroxyl group content means the number of hydroxyl groups (preferably, phenolic hydroxyl groups) contained in 1 g of the compound.

Furthermore, the phenolic compound represented by General Formula (1) may have an active hydrogen-containing group capable of a polymerization reaction with an epoxy compound, in addition to the hydroxyl group (phenolic hydroxyl group). The lower limit value of the content (total content of active hydrogen atoms in the active hydrogen-containing group) of active hydrogen in the phenolic compound represented by General Formula (1) is preferably 10.0 mmol/g or greater and more preferably 16.0 mmol/g or greater. The upper limit value thereof is preferably 30.0 mmol/g or less and more preferably 25.0 mmol/g or less.

Moreover, the content of the active hydrogen means the number of active hydrogen atoms contained in 1 g of the compound.

The phenolic compound represented by General Formula (1) may be used alone or in combination of two or more kinds thereof.

In a case where the composition according to the embodiment of the present invention contains the phenolic compound represented by General Formula (1), the content of the phenolic compound represented by General Formula (1) is preferably 1.0% to 35.0% by mass, more preferably 2.0% to 25.0% by mass, and even more preferably 3.0% to 12.0% by mass, with respect to the total solid content of the composition.

Furthermore, the composition according to the embodiment of the present invention may contain compounds (also referred to as "other active hydrogen-containing compounds") having a group capable of reacting with the epoxy group, as compounds other than the phenolic compound represented by General Formula (1).

In a case where the composition according to the embodiment of the present invention contains the phenolic compound represented by General Formula (1) and also contains the other active hydrogen-containing compounds, a mass ratio (the content of the other active hydrogen-containing compounds/the content of the phenolic compound represented by General Formula (1)) of a content of the other active hydrogen-containing compounds to the content of the phenolic compound represented by General Formula (1) in the composition according to the embodiment of the present invention is preferably 0 to 1, more preferably 0 to 0.1, and even more preferably 0 to 0.08.

Examples of the other active hydrogen-containing compounds include phenolic compounds (the other phenolic compounds) other than the phenolic compound represented by General Formula (1).

As the other phenolic compounds, for example, benzene polyol such as benzenetriol, a biphenyl aralkyl-type phenolic resin, a phenol novolac resin, a cresol novolac resin, an aromatic hydrocarbon formaldehyde resin-modified phenolic resin, a dicyclopentadiene phenol addition-type resin, a phenol aralkyl resin, a polyhydric phenol novolac resin synthesized from a polyhydric hydroxy compound and formaldehyde, a naphthol aralkyl resin, a trimethylolmethane resin, a tetraphenylolethane resin, a naphthol novolac resin, a naphthol phenol co-condensed novolac resin, a naphthol cresol co-condensed novolac resin, a biphenyl-modified phenolic resin, a biphenyl-modified naphthol resin, an aminotriazine-modified phenolic resin, an alkoxy group-containing aromatic ring-modified novolac resin, or the like is also preferable.

In addition, the other phenolic compounds are compounds represented by any one of General Formula (B01), ..., or (B03) in a surface modifier, which will be described later, and are preferably compounds different from a compound having one or more phenolic hydroxyl groups.

The details of General Formulae (B01) to (B03) will be described later.

### [Epoxy compound]

The composition according to the embodiment of the present invention contains an epoxy compound.

The epoxy compound is a compound having at least one epoxy group (oxiranyl group) in one molecule. The epoxy group may or may not have a substituent, if possible.

The number of epoxy groups contained in the epoxy compound is preferably 2 or more, more preferably 2 to 40, even more preferably 2 to 10, and particularly preferably 2, in one molecule.

A molecular weight of the epoxy compound is preferably 150 to 10,000, more preferably 150 to 2,000, and even more preferably 250 to 400.

The lower limit value of the epoxy group content of the epoxy compound is preferably 2.0 mmol/g or greater, more preferably 4.0 mmol/g or greater, and even more preferably 5.0 mmol/g or greater. The upper limit value thereof is preferably 20.0 mmol/g or less, more preferably 15.0 mmol/g or less, and even more preferably 10.0 mmol/g or less.

Moreover, the epoxy group content means the number of epoxy groups contained in 1 g of the epoxy compound.

The epoxy compound may or may not exhibit liquid crystallinity.

That is, the epoxy compound may be a liquid crystal compound. **In** other words, a liquid crystal compound having an epoxy group can also be used as the epoxy compound.

Examples of the epoxy compound (which may be a liquid crystalline epoxy compound) include a compound (rod-like compound) which has a rod-like structure in at least a portion thereof, and a compound (disk-like compound) which has a disk-like structure in at least a portion thereof.

Among them, a rod-like compound is preferable from the viewpoint that the thermally conductive properties of the obtained thermally conductive material are superior.

Hereinafter, the rod-like compound and the disk-like compound will be described in detail.

### (Rod-like compound)

Examples of the epoxy compound, which is a rod-like compound, include azomethines, azoxies, cyanobiphenyls, cyanophenyl esters, benzoates, cyclohexane carboxylic acid phenyl esters, cyanophenyl cyclohexanes, cyano-substituted phenylpyrimidines, alkoxy-substituted phenylpyrimidines, phenyldioxanes, tolans, and alkenylcyclohexyl benzonitriles. In addition to these low-molecular-weight compounds described above, high-molecular-weight compounds can also be used. The high-molecular-weight compounds are high-molecular-weight compounds obtained by polymerizing rod-like compounds having a low-molecular-weight reactive group.

Examples of a preferred rod-like compound include a rod-like compound represented by General Formula (E1).

Among them, the rod-like compound is preferably a compound represented by General Formula (E1).

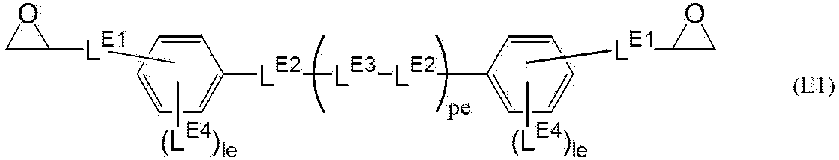

In General Formula (E1), L^{E1}'s each independently represent a single bond or a divalent linking group.

Among them, L^{E1} is preferably a divalent linking group.

The divalent linking group is preferably -O-, -S-, -CO-, -NH-, -CH=CH-, -C≡C-, -CH=N-, -N=CH-, -N=N-, an alkylene group which may have a substituent, or a group consisting of a combination of two or more thereof, and more preferably -O-alkylene group- or -alkylene group-O-.

Moreover, the alkylene group may be linear, branched, or cyclic, but is preferably a linear alkylene group having 1 or 2 carbon atoms.

The plurality of L^{E1}'s may be the same as or different from each other.

In General Formula (E1), L^{E2}'s each independently represent a single bond, -CH=CH-, -CO-O-, -O-CO-, -C(-CH₃)=CH-, -CH=C(-CH₃)-, -CH=N-, -N=CH-, -N=N-, -C≡C-, -N=N⁺(-O⁻)-, -N⁺(-O⁻)=N-, -CH=N⁺(-O⁻)-, -N⁺(-O⁻)=CH-, -CH=CH-CO-, -CO-CH=CH-, -CH=C(-CN)-, or -C(-CN)=CH-.

Among them, L^{E2}'s are each independently preferably a single bond, -CO-O-, or -O-CO-.

In a case where there are a plurality of L^{E2}'s, the plurality of L^{E2}'s may be the same as or different from each other.

In General Formula (E1), L^{E3}'s each independently represent a single bond, a 5-membered or 6-membered aromatic ring group or a 5-membered or 6-membered non-aromatic ring group, which may have a substituent, or a polycyclic group consisting of these rings.

Examples of the aromatic ring group and non-aromatic ring group represented by L^{E3} include a 1,4-cyclohexanediyl group, a 1,4-cyclohexenediyl group, a 1,4-phenylene group, a pyrimidine-2,5-diyl group, a pyridine-2,5-diyl group, a 1,3,4-thiadiazole-2,5-diyl group, a 1,3,4-oxadiazole-2,5-diyl group, a naphthalene-2,6-diyl group, a naphthalene-1,5-diyl group, a thiophene-2,5-diyl group, and a pyridazine-3,6-diyl group, each of which may have a substituent. In a case of the 1,4-cyclohexanediyl group, the group may be any one isomer of structural isomers of a trans-isomer and a cis-isomer, or a mixture in which the isomers are mixed at any ratio. Among them, a trans-isomer is preferable.

In particular, L^{E3} is preferably a single bond, a 1,4-phenylene group, or a 1,4-cyclohexenediyl group.

The substituents contained in the groups represented by L^{E3} are each independently preferably an alkyl group, an alkoxy group, a halogen atom, a cyano group, a nitro group, or an acetyl group, and more preferably an alkyl group (preferably having 1 carbon atom).

Furthermore, in a case where there are a plurality of substituents, these substituents may be the same as or different from each other.

In a case where there are a plurality of L^{E3}'s, the plurality of L^{E3}'s may be the same as or different from each other.

In General Formula (E1), pe represents an integer of 0 or greater.

In a case where pe is an integer of 2 or greater, a plurality of (-L^{E3}-L^{E2} -)'s may be the same as or different from each other.

Among them, pe is preferably 0 to 2, more preferably 0 or 1, and even more preferably 0.

In General Formula (E1), L^{E4}'s each independently represent a substituent.

The substituents are each independently preferably an alkyl group, an alkoxy group, a halogen atom, a cyano group, a nitro group, or an acetyl group, and more preferably an alkyl group (preferably having 1 carbon atom).

The plurality of L^{E4}'s may be the same as or different from each other. Moreover, in a case where le described below is an integer of 2 or greater, the plurality of L^{E4}'s in the same (L^{E4})₁ₑ may also be the same as or different from each other.

In General Formula (E1), le's each independently represent an integer of 0 to 4. Among them, le's are each independently preferably 0 to 2.

The plurality of le's may be the same as or different from each other.

The rod-like compound preferably has a biphenyl skeleton.

### (Disk-like compound)

The epoxy compound, which is a disk-like compound, has a disk-like structure in at least a portion thereof.

The disk-like structure has at least an alicyclic ring or an aromatic ring. In particular, in a case where the disk-like structure has an aromatic ring, the disk-like compound can form a columnar structure by forming a stacking structure based on the intermolecular π-π interaction.

Examples of the disk-like structure include the triphenylene structure described in Angew. Chem. Int. Ed. 2012, 51, 7990 to 7993, or JP1995-306317A (JP-H07-306317A), and the trisubstituted benzene structures described in JP2007-2220A and JP2010-244038A.

The disk-like compound preferably has three or more epoxy groups. The cured substance of the epoxy compound, which includes the disk-like compound having three or more epoxy groups, tends to have a high glass transition temperature and high heat resistance.

The number of epoxy groups contained in the disk-like compound is preferably 8 or less and more preferably 6 or less.

Examples of the disk-like compound include compounds which have an epoxy group at at least one (preferably, three or more) of terminals in the compounds or the like described in C. Destrade et al., Mol. Crysr. Liq. Cryst., vol. 71, page 111 (1981); edited by The Chemical Society of Japan, Quarterly Review of Chemistry, No. 22, Chemistry of liquid crystal, Chapter 5, Chapter 10, Section 2 (1994); B. Kohne et al., Angew. Chem. Soc. Chem. Comm., page 1794 (1985); J. Zhang et al., J. Am. Chem. Soc., vol. 116, page 2655 (1994); and JP4592225B.

Examples of the disk-like compound include compounds which have an epoxy group at at least one (preferably, three or more) of terminals in the triphenylene structure described in Angew. Chem. Int. Ed. 2012, 51, 7990 to 7993 and JP1995-306317A (JP-H07-306317A) and the trisubstituted benzene structures described in JP2007-2220A and JP2010-244038A.

Examples of epoxy compounds other than the aforementioned epoxy compound include an epoxy compound represented by General Formula (DN).

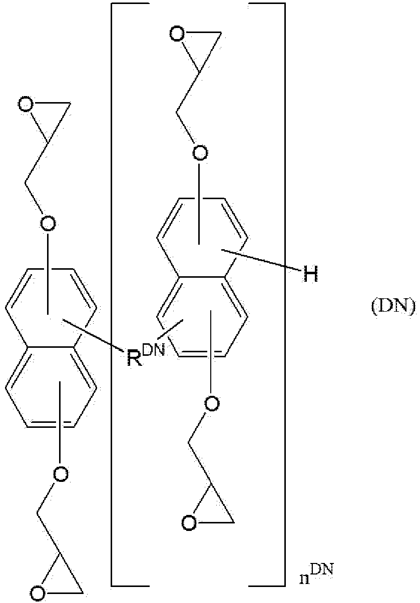

In General Formula (DN), n^{DN} represents an integer of 0 or greater, and is preferably 0 to 5 and more preferably 1.

R^{DN} represents a single bond or a divalent linking group. The divalent linking group is preferably -O-, -O-CO-, -CO-O-, -S-, an alkylene group (the number of carbon atoms is preferably 1 to 10), an arylene group (the number of carbon atoms is preferably 6 to 20), or a group consisting of a combination thereof, more preferably an alkylene group, and even more preferably a methylene group.

In addition to the aforementioned epoxy compounds, examples of the epoxy compound include an epoxy compound represented by General Formula (DO).

(X-Z¹-)ₘ-A-(-Z²-Y)ₙ (DO)

m in General Formula (DO) represents an integer of 3 or greater (preferably an integer of 3 to 20 and more preferably an integer of 3 to 6).

n in General Formula (DO) represents an integer of 0 or greater (preferably an integer of 0 to 5 and more preferably 0).

X in General Formula (DO) represents an epoxy group.

Y in General Formula (DO) represents a hydroxyl group.

In General Formula (DO), Z¹ and Z² each independently represent a single bond or an alkylene group having 1 to 7 carbon atoms.

One or more -CH₂-'s constituting the alkylene group may be substituted with -O-.

The number of carbon atoms in the alkylene group is preferably 1 to 6 and more preferably 1 to 4.

Furthermore, the number of carbon atoms in the alkylene group mentioned here is the number of carbon atoms in a state before -CH₂- constituting the alkylene group is substituted with -O-.

Here, an atom adjacent to -O- is preferably a carbon atom or a nitrogen atom, and more preferably a carbon atom.

Z¹ is preferably "-(CH²)_{ZN}-O-". ZN in "-(CH²)_{ZN}-O-" represents an integer of 1 to 6, and is preferably 1 to 3 and more preferably 1. "-(CH²)_{ZN}-" in "-(CH²)_{ZN}-O-" is preferably present on an X side (epoxy group side).

Z² is preferably a single bond.

In General Formula (DO), A represents an (m + n)-valent aliphatic saturated hydrocarbon group.

One or more -CH₂-'s constituting the aliphatic saturated hydrocarbon group may be substituted with -O-. Here, an atom adjacent to -O- is preferably a carbon atom or a nitrogen atom, and more preferably a carbon atom.

One or more -CH<'s constituting the aliphatic saturated hydrocarbon group may be substituted with -N<. Here, an atom adjacent to -N< is preferably a carbon atom, an oxygen atom, or a nitrogen atom, and more preferably a carbon atom.

The number of carbon atoms in the aliphatic saturated hydrocarbon group is preferably 1 to 30, more preferably 3 to 20, and even more preferably 2 to 15.

Furthermore, the preferred number of carbon atoms in the aliphatic saturated hydrocarbon group mentioned here is the number of carbon atoms in a state before -CH₂- and/or -CH< constituting the aliphatic saturated hydrocarbon group is substituted with -O- and/or -N<.

In a case where there are a plurality of X's, the plurality of X's may be the same as or different from each other.

In a case where there are a plurality of Y's, the plurality of Y's may be the same as or different from each other.

In a case where there are a plurality of Z¹'s, the plurality of Z¹'s may be the same as or different from each other.

In a case where there are a plurality of Z²'s, the plurality of Z²'s may be the same as or different from each other.

Examples of the epoxy compound include, in addition to the aforementioned epoxy compounds, a bisphenol A-type epoxy compound (compound in which in General Formula (E1), "pe is 0" and "L^{E2} is -C(CH₃)₂-", or the like), a bisphenol F-type epoxy compound, a bisphenol S-type epoxy compound, a bisphenol AD-type epoxy compound, and the like, which are glycidyl ethers of bisphenol A, F, S, and AD, and the like; a hydrogenated bisphenol A-type epoxy compound, a hydrogenated bisphenol AD-type epoxy compound, and the like; a phenol novolac-type glycidyl ether (phenol novolac-type epoxy compound), a cresol novolac-type glycidyl ether (cresol novolac-type epoxy compound), a bisphenol A novolac-type glycidyl ether, and the like; a dicyclopentadiene-type glycidyl ether (dicyclopentadiene-type epoxy compound); a dihydroxypentadiene-type glycidyl ether (dihydroxypentadiene-type epoxy compound); a polyhydroxybenzene-type glycidyl ether (polyhydroxybenzene-type epoxy compound); a benzene polycarboxylic acid-type glycidyl ester (benzene polycarboxylic acid-type epoxy compound); an alicyclic epoxy compound such as 3,4:8,9-diepoxybicyclo[4.3.0]nonane; and a trisphenol methane-type epoxy compound.

Furthermore, the epoxy compounds are compounds represented by any one of General Formula (B01), ..., or (B03) in a surface modifier for an inorganic nitride, which will be described later, and are preferably different from a compound (compound represented by any one of General Formula (B01), ..., or (B03) and having an epoxy group) having one or more epoxy groups.

The epoxy compound may be used alone or in combination of two or more kinds thereof.

In a case where the composition according to the embodiment of the present invention contains the epoxy compound, the content of the epoxy compound is preferably 1.0% to 25.0% by mass, more preferably 3.0% to 20.0% by mass, and even more preferably 10.0% to 20.0% by mass, with respect to the total solid content of the composition.

### [Inorganic substance]

The composition contains an inorganic substance.

As the inorganic substance, for example, any inorganic substances, which have been used in the related art in an inorganic filler of a thermally conductive material, may be used. The inorganic substance includes an inorganic nitride or an inorganic oxide and more preferably includes an inorganic nitride, from the viewpoint that the thermally conductive properties and insulating properties of the thermally conductive material are superior. The inorganic substance includes at least one of an inorganic nitride selected from boron nitride or an inorganic oxide selected from aluminum oxide.

A shape of the inorganic substance is not particularly limited, and may be a granule shape, a film shape, or a plate shape. Examples of a shape of the granular inorganic substance include a rice grain shape, a spherical shape, a cubical shape, a spindle shape, a scale shape, an aggregation shape, and an amorphous shape.

Other examples of inorganic oxides include zirconium oxide (ZrO₂), titanium oxide (TiO₂), silicon oxide (SiO₂), iron oxide (Fe₂O₃, FeO, or Fe₃O₄), copper oxide (CuO or Cu₂O), zinc oxide (ZnO), yttrium oxide (Y₂O₃), niobium oxide (Nb₂O₅), molybdenum oxide (MoO₃), indium oxide (In₂O₃ or In₂O), tin oxide (SnO₂), tantalum oxide (Ta₂O₅), tungsten oxide (WO₃ or W₂O₅), lead oxide (PbO or PbO₂), bismuth oxide (Bi₂O₃), cerium oxide (CeO₂ or Ce₂O₃), antimony oxide (Sb₂O₃ or Sb₂O₅), germanium oxide (GeO₂ or GeO), lanthanum oxide (La₂O₃), and ruthenium oxide (RuO₂).

The inorganic oxide may be used alone or in combination of two or more kinds thereof.

The inorganic oxide is aluminum oxide.

The inorganic oxide may be an oxide which is produced by oxidizing a metal prepared as a nonoxide in an environment or the like.

Other examples of inorganic nitrides include carbon nitride (C₃N₄), silicon nitride (Si₃N₄), gallium nitride (GaN), indium nitride (InN), aluminum nitride (AlN), chromium nitride (Cr₂N), copper nitride (Cu₃N), iron nitride (Fe₄N), iron nitride (Fe₃N), lanthanum nitride (LaN), lithium nitride (Li₃N), magnesium nitride (Mg₃N₂), molybdenum nitride (Mo₂N), niobium nitride (NbN), tantalum nitride (TaN), titanium nitride (TiN), tungsten nitride (W₂N), tungsten nitride (WN₂), yttrium nitride (YN), and zirconium nitride (ZrN).

The inorganic nitride contains boron nitride.
The inorganic nitride may be used alone or in combination of two or more kinds thereof.

A size of the inorganic substance is not particularly limited, but from the viewpoint that the dispersibility of the inorganic substance is superior, an average particle diameter of the inorganic substances is preferably 500 µm or less, more preferably 300 µm or less, and even more preferably 200 µm or less. The lower limit thereof is not particularly limited, but is preferably 10 nm or greater and more preferably 100 nm or greater, from the viewpoint of handleability.

In a case where a commercial product is used, the value listed in the catalog is adopted for the average particle diameter of the inorganic substances. In a case where a value is not listed in the catalog, the average particle diameter is determined by randomly selecting 100 inorganic substances using an electron microscope, measuring particle diameters (major axes) of the respective inorganic substances, and arithmetically averaging the particle diameters.

The inorganic substance may be used alone or in combination of two or more kinds thereof.

The inorganic substance includes at least one of an inorganic nitride or an inorganic oxide, and more preferably includes at least an inorganic nitride.

The inorganic nitride includes at least boron nitride.

A content of the inorganic nitride (boron nitride) in the inorganic substance is preferably 10% by mass or greater, more preferably 50% by mass or greater, and even more preferably 80% by mass or greater, with respect to the total mass of the inorganic substance. The upper limit thereof is 100% by mass or less.

The inorganic oxide is aluminum oxide.

From the viewpoint that the thermally conductive properties of the thermally conductive material are superior, the composition more preferably contains at least inorganic substances having an average particle diameter of 20 µm or greater (preferably 40 µm or greater).

A content of the inorganic substance in the composition is preferably 40% to 95% by mass, more preferably 50% to 95% by mass, and even more preferably 60% to 95% by mass, with respect to the total solid content of the composition.

### [Surface modifier]

The composition according to the embodiment of the present invention may further contain a surface modifier from the viewpoint that the thermally conductive properties of the thermally conductive material are superior.

The surface modifier is a component which modifies a surface of the aforementioned inorganic substance (an inorganic nitride and/or an inorganic oxide).

In the present specification, "surface modification" means a state where an organic substance is adsorbed onto at least a portion of a surface of an inorganic substance. A form of the adsorption is not particularly limited, and may be in a bonded state. That is, the surface modification also includes a state where an organic group obtained by desorbing a portion of an organic substance is bonded to a surface of an inorganic substance. The bond may be any one of a covalent bond, a coordinate bond, an ionic bond, a hydrogen bond, a van der Waals bond, or a metallic bond. The surface modification may be performed so that a monolayer is formed on at least a portion of the surface. The monolayer is a single-layer film formed by chemical adsorption of organic molecules, and is known as a self-assembled monolayer (SAM). Moreover, in the present specification, the surface modification may be performed only on a portion of the surface of the inorganic substance, or may be performed on the entire surface thereof. In the present specification, a "surface-modified inorganic substance" means an inorganic substance of which the surface is modified with a surface modifier, that is, matter in which an organic substance is adsorbed onto a surface of an inorganic substance.

The surface modifier may be a surface modifier for an inorganic nitride (surface modifier for an inorganic nitride), or a surface modifier for an inorganic oxide (surface modifier for an inorganic oxide).

That is, in the composition according to the embodiment of the present invention, the inorganic substance may form a surface-modified inorganic substance (preferably, a surface-modified inorganic nitride and/or a surface-modified inorganic oxide) in cooperation with the surface modifier.

As the surface modifier, for example, surface modifiers, which is known in the related art, such as carboxylic acid such as a long-chain alkyl fatty acid, organic phosphonic acid, organic phosphate, and an organic silane molecule (silane coupling agent) can be used. In addition to the aforementioned surface modifiers, for example, the surface modifiers described in JP2009-502529A, JP2001-192500A, and JP4694929B may be used.

Furthermore, the composition (preferably, in a case where the inorganic substance includes an inorganic nitride (boron nitride and/or aluminum nitride)) preferably contains a compound having a fused-ring skeleton (preferably a fused-ring skeleton in which aromatic rings are fused) or a compound having a triazine skeleton, as the surface modifier.

That is, these compounds are preferably used as the surface modifier for an inorganic nitride.

### <Surface modifier A>

The surface modifier (preferably, the surface modifier for an inorganic nitride) is preferably a surface modifier A described below. Moreover, the surface modifier A is a surface modifier having a fused-ring skeleton.

The surface modifier A satisfies the following Conditions 1 and 2.
· Condition 1: The surface modifier A has a functional group (hereinafter, also referred to as a "specific functional group A") selected from the following group P of functional groups.

### (Group P of functional groups)

A functional group selected from the group consisting of a boronic acid group (-B(OH)₂), an aldehyde group (-CHO), an isocyanate group (-N=C=O), an isothiocyanate group (-N=C=S), a cyanate group (-O-CN), an acyl azide group, a succinimide group, a sulfonyl chloride group (-SO₂Cl), a carboxylic acid chloride group (-COCl), an onium group, a carbonate group (-O-CO-O-), an aryl halide group, a carbodiimide group (-N=C=N-), an acid anhydride group (-CO-O-CO- or a monovalent acid anhydride group such as maleic acid anhydride, phthalic acid anhydride, pyromellitic acid anhydride, and trimellitic acid anhydride), a carboxylic acid group (-COOH), a phosphonic acid group (-PO(OH)₂), a phosphinic acid group (-HPO(OH)), a phosphoric acid group (-OP(=O)(OH)₂), a phosphate group (-OP(=O)(OR^{B})₂), a sulfonic acid group (-SO₃H), a halogenated alkyl group, a nitrile group (-CN), a nitro group (-NO₂), an ester group (-CO-O- or -O-CO-), a carbonyl group (-CO-), an imidoester group (-C(=NR^{C})-O- or -O-C(=NR^{C})-), an alkoxysilyl group, an acrylic group (-OCOCH₂=CH₂), a methacrylic group (-OCOCH(CH₃)=CH₂), an oxetanyl group, a vinyl group (-CH=CH₂), an alkynyl group (a group obtained by removing one hydrogen atom from alkyne, and examples thereof include an ethynyl group and a prop-2-yn-1-yl group), a maleimide group, a thiol group (-SH), a hydroxyl group (-OH), a halogen atom (a F atom, a Cl atom, a Br atom, and an I atom), and an amino group.

The acyl azide group means a group represented by the following structure. Moreover, * in the formula represents a bonding position. Examples of a counter anion (Z⁻) of the acyl azide group include a halogen ion.

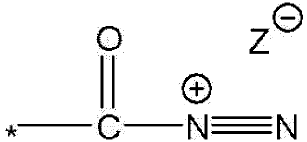

The succinimide group, the oxetanyl group, and the maleimide group represent groups formed by removing one hydrogen atom at any position from the compounds represented by the following formulae, respectively.

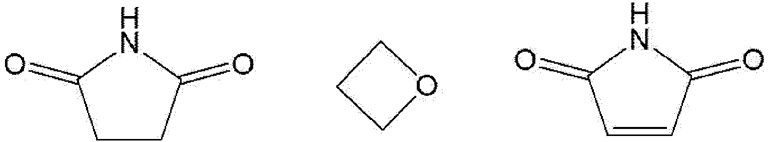

Furthermore, the onium group means a group having an onium salt structure. The onium salt is a compound which is generated by a coordinate bond between a compound having an electron pair not being involved in chemical bonding and another cationic compound through the electron pair. Generally, the onium salt contains a cation and an anion.

Examples of the onium salt structure include an ammonium salt structure, a pyridinium salt structure, an imidazolium salt structure, a pyrrolidinium salt structure, a piperidinium salt structure, a triethylenediamine salt structure, a phosphonium salt structure, a sulfonium salt structure, and a thiopyrylium salt structure. Moreover, a kind of the anion used as a counter is not particularly limited, and known anions are used. Examples of a va lence of the anion include monovalence to trivalence, and monovalence or divalence is preferable.

Among them, the onium group is preferably a group having an ammonium salt structure and represented by General Formula (A1).

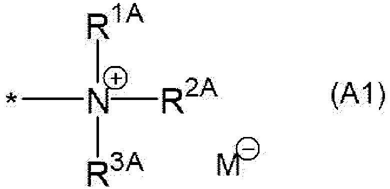

In General Formula (A1), R^{1A} to R^{3A} each independently represent a hydrogen atom or an alkyl group (including all of a linear alkyl group, a branched alkyl group, and a cyclic alkyl group). The number of carbon atoms in the alkyl group is, for example, 1 to 10, preferably 1 to 6, and more preferably 1 to 3. M⁻ represents an anion. * represents a bonding position. Moreover, the alkyl group may further have a substituent (for example, the substituent group Y).

The aryl halide group is not particularly limited as long as the aryl halide group is a group in which one or more halogen atoms are substituted on an aromatic ring group. The aromatic ring group may have any one of a monocyclic structure or a polycyclic structure, but is preferably a phenyl group. Moreover, examples of the halogen atom include a fluorine atom, a chlorine atom, a bromine atom, and an iodine atom, and a fluorine atom is preferable. Furthermore, the aryl halide group may further have a substituent (for example, the substituent group Y).

Examples of the aryl halide group include a fluorophenyl group, a perfluorophenyl group, a chlorophenyl group, a bromophenyl group, and an iodophenyl group.

The phosphate group is not particularly limited as long as the phosphate group is a group represented by -OP(=O)(OR^{B})₂. Examples of R^{B} include a hydrogen atom or a monovalent organic group. Here, any one or more of R^{B}'s each represent a monovalent organic group. Examples of the monovalent organic group include an alkyl group (including all of a linear alkyl group, a branched alkyl group, and a cyclic alkyl group) and an aryl group. The number of carbon atoms in the alkyl group is, for example, 1 to 10, preferably 1 to 6, and more preferably 1 to 3. Moreover, the alkyl group may further have a substituent (for example, the substituent group Y). Furthermore, examples of the aryl group include a phenyl group and a pyrenyl group.

Examples of the halogenated alkyl group include a group in which one or more halogen atoms are substituted on an alkyl group having 1 to 10 carbon atoms. The number of carbon atoms in the alkyl group (including all of a linear alkyl group, a branched alkyl group, and a cyclic alkyl group) is preferably 1 to 6 and more preferably 1 to 3. Examples of the halogen atom include a fluorine atom, a chlorine atom, a bromine atom, and an iodine atom, and a fluorine atom, a chlorine atom, or a bromine atom is preferable. Moreover, the halogenated alkyl group may further have a substituent (for example, the substituent group Y).

The imidoester group is not particularly limited as long as the imidoester group is a group represented by -C(=NR^{C})-O- or -O-C(=NR^{C})-. Examples of R^{C} include a hydrogen atom and an alkyl group (including all of a linear alkyl group, a branched alkyl group, and a cyclic alkyl group). The number of carbon atoms in the alkyl group is, for example, 1 to 10, preferably 1 to 6, and more preferably 1 to 3. Moreover, the alkyl group may further have a substituent (for example, the substituent group Y).

Furthermore, the imidoester group may have an onium salt structure by a coordinate bond between an electron pair not being involved in chemical bonding of imine nitrogen and another cation (for example, a hydrogen ion).

Examples of the alkoxysilyl group include a group represented by General Formula (A2).

General Formula (A2): *-Si(OR^{D})₃

**In** General Formula (A2), R^{D}'s each independently represent an alkyl group (including all of a linear alkyl group, a branched alkyl group, and a cyclic alkyl group). * represents a bonding position.

Examples of the alkyl group represented by R^{D} include an alkyl group having 1 to 10 carbon atoms, and the number of carbon atoms is preferably 1 to 6 and more preferably 1 to 3.

Specific examples thereof include a trimethoxysilyl group and a triethoxysilyl group.

Moreover, the alkyl group may further have a substituent (for example, the substituent group Y).

The amino group may be any one of a primary amino group, a secondary amino group, or a tertiary amino group. Specific examples thereof include an amino group represented by -N(R^{E})2 (R^{E}'s are each independently represent a hydrogen atom or an alkyl group (including all of a linear alkyl group, a branched alkyl group, and a cyclic alkyl group)). The number of carbon atoms in the alkyl group is, for example, 1 to 10, preferably 1 to 6, and more preferably 1 to 3. Moreover, the alkyl group may further have a substituent (for example, the substituent group Y)).

The number of the specific functional groups A in the surface modifier A is not particularly limited as long as the number thereof is 1 or more. Moreover, the upper limit thereof is not particularly limited, but is preferably 15 or less. Among them, from the viewpoint that the dispersibility of the surface-modified inorganic substance (preferably, the surface-modified inorganic nitride) is superior, the number of the specific functional groups A is preferably 1 to 8, more preferably 1 to 3, and even more preferably 1 or 2.

· Condition 2: the surface modifier A has a fused-ring structure containing two or more rings selected from the group consisting of an aromatic hydrocarbon ring and an aromatic heterocyclic ring.

Examples of the aromatic hydrocarbon ring include a monocyclic aromatic hydrocarbon ring having a 5- or higher membered ring. The upper limit of the number of ring members is not particularly limited, but is 10 or less in many cases. The aromatic hydrocarbon ring is preferably a monocyclic aromatic hydrocarbon ring having a 5-membered or 6-membered ring.

Examples of the aromatic hydrocarbon ring include a cyclopentadienyl ring and a benzene ring.

Examples of the aromatic heterocyclic ring include a monocyclic aromatic heterocyclic ring having a 5- or higher membered ring. The upper limit of the number of ring members is not particularly limited, but is 10 or less in many cases. As the aromatic heterocyclic ring, for example, a monocyclic aromatic heterocyclic ring having a 5-membered or 6-membered ring is preferable.

Examples of the aromatic heterocyclic ring include a thiophene ring, a thiazole ring, an imidazole ring, a pyridine ring, a pyridazine ring, a pyrimidine ring, a pyrazine ring, and a triazine ring.

The fused-ring structure is not particularly limited as long as the condensed structure is a fused-ring structure containing two or more rings selected from the group consisting of an aromatic hydrocarbon ring and an aromatic heterocyclic ring, but from the viewpoint that the effect of the present invention is superior, among them, a fused-ring structure containing two or more aromatic hydrocarbon rings is preferable, a fused-ring structure containing two or more benzene rings is more preferable, and a fused-ring structure containing three or more benzene rings is even more preferable. Moreover, the upper limits of the numbers of the aromatic hydrocarbon rings and the aromatic heterocyclic rings contained in the condensed structure are each, for example, 10 or less in many cases.

The fused-ring structure having two or more aromatic hydrocarbon rings is preferably a condensed structure which consists of a fused ring selected from the group consisting of biphenylene, indacene, acenaphthylene, fluorene, phenalene, phenanthrene, anthracene, fluoranthene, acephenanthrylene, aceanthrylene, pyrene, chrysene, tetracene, pleiadene, picene, perylene, pentaphene, pentacene, tetraphenylene, hexaphene, and triphenylene, and from the viewpoint that the effect of the present invention is superior, among them, a condensed structure consisting of a fused ring containing two or more benzene rings is more preferable, a condensed structure consisting of a fused ring containing three or more benzene rings is even more preferable, and a condensed structure consisting of pyrene or perylene is particularly preferable.

From the viewpoint that the dispersibility is further improved, the surface modifier A is preferably a compound represented by General Formula (V1) and more preferably a compound represented by General Formula (V2).

Hereinafter, the compound represented by General Formula (V1) and the compound represented by General Formula (V2) will be described, respectively.

(Compound represented by General Formula (V1))

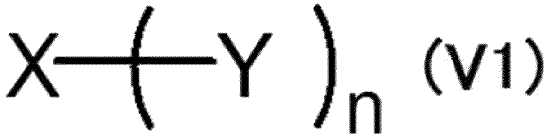

In General Formula (V1), X represents an n-valent organic group which has a fused-ring structure containing two or more rings selected from the group consisting of an aromatic hydrocarbon ring and an aromatic heterocyclic ring.

X represents an n-valent organic group (n is an integer of 1 or greater). n is not particularly limited as long as n is an integer of 1 or greater. Moreover, the upper limit thereof is not particularly limited, but is preferably an integer of 15 or less. Among them, from the viewpoint that the dispersibility of the surface-modified inorganic substance (preferably, the surface-modified inorganic nitride) is superior, n is preferably 1 to 8, more preferably 1 to 3, and even more preferably 1 or 2.

Examples of the fused-ring structure containing two or more rings selected from the group consisting of the aromatic hydrocarbon ring and the aromatic heterocyclic ring in X include the aforementioned structures, and the preferred aspect thereof is also the same as described above.

The n-valent organic group represented by X is not particularly limited as long as the organic group has a fused-ring structure containing two or more rings selected from the group consisting of an aromatic hydrocarbon ring and an aromatic heterocyclic ring, but from the viewpoint that the effect of the present invention is superior, a group formed by extracting n hydrogen atoms from a fused ring containing two or more rings selected from the group consisting of an aromatic hydrocarbon ring and an aromatic heterocyclic ring is preferable.

Moreover, the condensed structure may further have a substituent (for example, the substituent group Y), in addition to the specific functional group A.

Y represents a monovalent group represented by General Formula (B1), a monovalent group represented by General Formula (B2), or a monovalent group represented by General Formula (B4), or represents a divalent group which is represented by General Formula (B3) and formed by bonding a plurality of Y's to each other, in a case where n represents an integer of 2 or greater.

In other words, in a case where n is 1, Y represents a monovalent group represented by General Formula (B1), a monovalent group represented by General Formula (B2), or a monovalent group represented by General Formula (B4).

In a case where n represents an integer of 2 or greater, Y represents a monovalent group represented by General Formula (B1), a monovalent group represented by General Formula (B2), or a monovalent group represented by General Formula (B4), or represents a divalent group which is represented by General Formula (B3) and formed by bonding a plurality of Y's to each other. Moreover, in a case where n is 2 or greater, the plurality of Y's may be the same as or different from each other.

Furthermore, in a case where Y represents a divalent group represented by General Formula (B3), the compound represented by General Formula (V1) is represented by General Formula (V3).

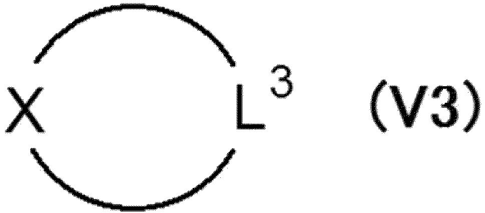

In General Formula (V3), X has the same definition as X in General Formula (V1). Moreover, L³ has the same definition as L³ in General Formula (B3).

General Formula (B1): *¹-L¹-P¹

In General Formula (B1), L¹ represents a single bond or a divalent linking group.

Examples of the divalent linking group include -O-, -S-, -NR^{F}- (R^{F} represents a hydrogen atom or an alkyl group), a divalent hydrocarbon group (for example, an alkylene group, an alkenylene group (for example, -CH=CH-), an alkynylene group (for example, -C≡C-), and an arylene group), a divalent organic group (a carbonate group (-O-CO-O-), a carbodiimide group (-N=C=N-), an acid anhydride group (-CO-O-CO-), an ester group (-CO-O- or -O-CO-), a carbonyl group (-CO-), and an imidoester group (-C(=NR^{C})-O- or -O-C(=NR^{C})-)) in the group P of functional groups, and a group obtained by combining these groups.

Examples of the combined group include -(divalent hydrocarbon group)-X¹¹¹-, -X¹¹¹-(divalent hydrocarbon group)-, -(divalent hydrocarbon group)-X¹¹¹-(divalent hydrocarbon group)-, -X¹¹¹-(divalent hydrocarbon group)-X¹¹¹-(divalent hydrocarbon group)-, and -(divalent hydrocarbon group)-X¹¹¹-(divalent hydrocarbon group)-X¹¹¹-. Moreover, -X¹¹¹- is -O-, -S-, -NR^{F}-, a divalent organic group in the group P of functional groups, or a group obtained by combining these groups. The total number of carbon atoms in the combined group is, for example, 1 to 20 and preferably 1 to 12.

P¹ represents a monovalent organic group (a boronic acid group (-B(OH)₂), an aldehyde group (-CHO), an isocyanate group (-N=C=O), an isothiocyanate group (-N=C=S), a cyanate group (-O-CN), an acyl azide group, a succinimide group, a sulfonyl chloride group (-SO₂Cl), a carboxylic acid chloride group (-COCl), an onium group, an aryl halide group, an acid anhydride group (examples thereof include a monovalent acid anhydride group such as maleic acid anhydride, phthalic acid anhydride, pyromellitic acid anhydride, and trimellitic acid anhydride), a carboxylic acid group (-COOH), a phosphonic acid group (-PO(OH)₂), a phosphinic acid group (-HPO(OH)), a phosphoric acid group (-OP(=O)(OH)₂), a phosphate group (-OP(=O)(OR^{B})₂), a sulfonic acid group (-SO₃H), a halogenated alkyl group, a nitrile group (-CN), a nitro group (-NO₂), an alkoxysilyl group, an acrylic group (-OCOCH₂=CH₂), a methacrylic group (-OCOCH(CH₃)=CH₂), an oxetanyl group, a vinyl group (-CH=CH₂), an alkynyl group (a group obtained by removing one hydrogen atom from alkyne, and examples thereof include an ethynyl group and a prop-2-yn-1-yl group), a maleimide group, a thiol group (-SH), a hydroxyl group (-OH), or a halogen atom (a F atom, a Cl atom, a Br atom, and an I atom)) in the group P of functional groups.

*¹ represents a position bonded to X.

General Formula (B2): *²-L²-P²

In General Formula (B2), L² represents a divalent linking group including a divalent organic group (a carbonate group (-O-CO-O-), a carbodiimide group (-N=C=N-), an acid anhydride group (-CO-O-CO-), an ester group (-CO-O- or -O-CO-), a carbonyl group (-CO-), or an imidoester group (-C(=NR^{C})-O- or -O-C(=NR^{C})-)) in the group P of functional groups.

Examples of L² include a divalent organic group in the group P of functional groups, and a group obtained by combining a divalent organic group in the group P of functional groups with a linking group selected from the group consisting of -O-, -S-, -NR^{F}- (R^{F} represents a hydrogen atom or an alkyl group), and a divalent hydrocarbon group (for example, an alkylene group, an alkenylene group (for example, -CH=CH-), an alkynylene group (for example, -C≡C-), and an arylene group).

Examples of the combined group include -(divalent hydrocarbon group)-X¹¹²-. Moreover, -X¹¹²- is a divalent organic group in the group P of functional groups, or a group obtained by combining a divalent organic group in the group P of functional groups with a divalent group selected from -O-, -S-, and -NR^{F}-. The total number of carbon atoms in the combined group is, for example, 1 to 20 and preferably 1 to 12.

P² represents a monovalent organic group. Examples of the monovalent organic group represented by P² include an alkyl group. The number of carbon atoms in the alkyl group is, for example, 1 to 10, preferably 1 to 6, and more preferably 1 to 3.

*² represents a position bonded to X.

General Formula (B3): *³¹-L³-*³²

In General Formula (B3), L³ represents a divalent linking group including a divalent organic group (a carbonate group (-O-CO-O-), a carbodiimide group (-N=C=N-), an acid anhydride group (-CO-O-CO-), an ester group (-CO-O- or -O-CO-), a carbonyl group (-CO-), or an imidoester group (-C(=NR^{C})-O- or -O-C(=NR^{C})-)) in the group P of functional groups.

Examples of L³ include a divalent organic group in the group P of functional groups, and a group obtained by combining a divalent organic group in the group P of functional groups with a linking group selected from the group consisting of -O-, -S-, -NRF- (R^{F} represents a hydrogen atom or an alkyl group), and a divalent hydrocarbon group (for example, an alkylene group, an alkenylene group (for example, -CH=CH-), an alkynylene group (for example, -C≡C-), and an arylene group).

Examples of the combined group include -(divalent hydrocarbon group)-X¹¹³-(divalent hydrocarbon group)-, -(divalent hydrocarbon group)-X¹¹³-, -X¹¹³-(divalent hydrocarbon group)-, and -X¹¹³-(divalent hydrocarbon group)-X¹¹³-. Moreover, -X¹¹³- is a divalent organic group in the group P of functional groups, or a group obtained by combining a divalent organic group in the group P of functional groups with a divalent group selected from -O-, -S-, and -NR^{F}-. The total number of carbon atoms in the combined group is, for example, 1 to 20 and preferably 1 to 12.

*³¹ and *³² represent positions bonded to X. That is, L³ forms a ring together with two different carbon atoms on a fused-ring structure represented by X.

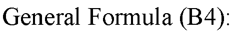

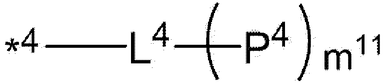

In General Formula (B4), L⁴ represents an (m¹¹ + 1)-valent linking group.

m¹¹ represents an integer of 2 or greater. The upper limit value of m¹¹ is, for example, 100 or less, preferably 30 or less, more preferably 20 or less, and even more preferably 15 or less. The lower limit value of m¹¹ is preferably 4 or greater.

Examples of the linking group represented by L⁴ include an (m¹¹ + 1)-valent aromatic hydrocarbon ring and a group represented by General Formula (M1).

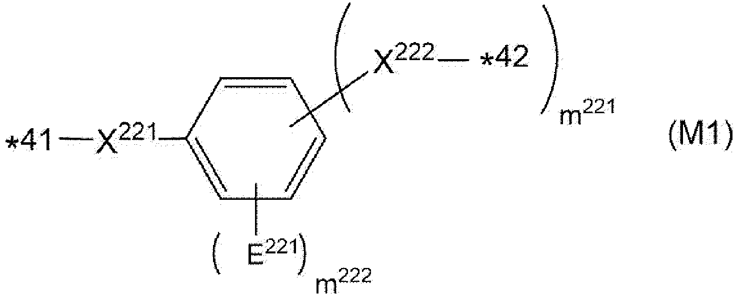

In General Formula (M1), X²²¹ and X²²² each independently represent a single bond or a divalent linking group. The divalent linking groups represented by X²²¹ and X²²² have the same definitions as the divalent linking group represented by L¹ in General Formula (B1), for example.

E²²¹ represents a substituent. Examples of the substituent represented by E²²¹ include the groups exemplified in the substituent group Y.

m²²¹ represents an integer 2 to 5. Among them, m²²¹ is preferably 2 or 3.

m²²² represents an integer 0 to 3.

Here, m²²¹ + m²²² represents an integer 2 to 5.

*⁴¹ represents a position bonded to X.

*⁴² represents a position bonded to P⁴.

Among them, the group represented by General Formula (M1) is preferably a group represented by General Formula (M2).

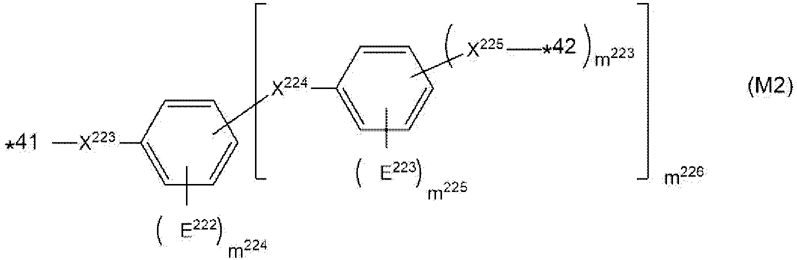

In General Formula (M2), X²²³, X²²⁴, and X²²⁵ each independently represent a single bond or a divalent linking group. The divalent linking groups represented by X²²³, X²²⁴, and X²²⁵ have the same definitions as the divalent linking group represented by L¹ in General Formula (B1), for example.

E²²² and E²²³ each independently represent a substituent. Examples of the substituents represented by E²²² and E²²³ include the groups exemplified in the substituent group Y.

m²²³ represents an integer 1 to 5. Among them, m²²³ is preferably 2 or 3.

m²²⁴ represents an integer 0 to 3.

m²²⁵ represents an integer 0 to 4.

m²²⁶ represents an integer 2 to 5. Among them, m²²⁶ is preferably 2 or 3.

Here, m²²⁴ + m²²⁶ represents an integer 2 to 5. Moreover, m²²³ + m²²⁵ represents an integer 1 to 5.

*⁴¹ represents a position bonded to X.

*⁴² represents a position bonded to P⁴.

P⁴ has the same definition as P¹ in General Formula (B1).

*⁴ represents a position bonded to X.

(Compound represented by General Formula (V2))

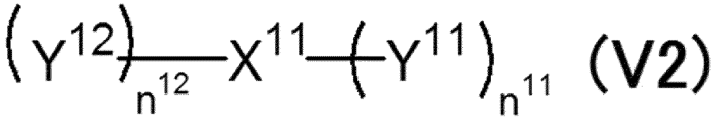

In General Formula (V2), X¹¹ represents an (n¹¹ + n¹²)-valent organic group which has a fused-ring structure containing two or more rings selected from the group consisting of an aromatic hydrocarbon ring and an aromatic heterocyclic ring.

X¹¹ represents an (n¹¹ + n¹²)-valent organic group (n¹¹ and n¹² are each independently an integer of 1 or greater). n¹¹ and n¹² are not particularly limited as long as n¹¹ and n¹² are each independently an integer of 1 or greater. Moreover, the upper limit of n¹¹ + n¹² is not particularly limited, but is preferably an integer of 15 or less. Among them, from the viewpoint that the dispersibility of the surface-modified inorganic substance is superior, n¹¹ + n¹² is preferably 2 to 8, more preferably 2 or 3, and even more preferably 2.

Examples of the fused-ring structure containing two or more rings selected from the group consisting of the aromatic hydrocarbon ring and the aromatic heterocyclic ring in X¹¹ include the aforementioned structures, and the preferred aspect thereof is also the same as described above.

The (n¹¹ + n¹²)-valent organic group represented by X¹¹ is not particularly limited as long as the organic group has a fused-ring structure containing two or more rings selected from the group consisting of an aromatic hydrocarbon ring and an aromatic heterocyclic ring, but from the viewpoint that the effect of the present invention is superior, a group formed by extracting (n¹¹ + n¹²) hydrogen atoms from a fused ring containing two or more rings selected from the group consisting of an aromatic hydrocarbon ring and an aromatic heterocyclic ring is preferable.

Moreover, the condensed structure may further have a substituent (for example, the substituent group Y), in addition to Y¹¹ and Y¹².

Y¹¹ contains a functional group selected from the following group Q of functional groups. Functional groups exemplified in the following group Q of functional groups correspond particularly to groups which tend to have excellent adsorptivity to an inorganic substance (in particular, an inorganic nitride), among the functional groups exemplified in the group P of functional groups.

Moreover, Y¹² contains a functional group selected from the following group R of functional groups. Functional groups exemplified in the following group R of functional groups correspond to groups which have a function of easily promoting the curing of the composition, among the functional groups exemplified in the group P of functional groups.

### (Group Q of functional groups)

A functional group selected from the group consisting of a boronic acid group (-B(OH)₂), an aldehyde group (-CHO), an isocyanate group (-N=C=O), an isothiocyanate group (-N=C=S), a cyanate group (-O-CN), an acyl azide group, a succinimide group, a sulfonyl chloride group (-SO₂Cl), a carboxylic acid chloride group (-COCl), an onium group, a carbonate group (-O-CO-O-), an aryl halide group, a carbodiimide group (-N=C=N-), an acid anhydride group (-CO-O-CO- or a monovalent acid anhydride group such as maleic acid anhydride, phthalic acid anhydride, pyromellitic acid anhydride, or trimellitic acid anhydride), a phosphonic acid group (-PO(OH)₂), a phosphinic acid group (-HPO(OH)), a phosphoric acid group (-OP(=O)(OH)₂), a phosphate group (-OP(=O)(OR^{B})₂), a sulfonic acid group (-SO₃H), a halogenated alkyl group, a nitrile group (-CN), a nitro group (-NO₂), an ester group (-CO-O- or -O-CO-), a carbonyl group (-CO-), an imidoester group (-C(=NR^{C})-O- or -O-C(=NR^{C})-), and a halogen atom (a fluorine atom, a chlorine atom, a bromine atom, and an iodine atom).

### (Group R of functional groups)

A functional group selected from the group consisting of a carboxylic acid group (-COOH), an alkoxysilyl group, an acrylic group (-OCOCH₂=CH₂), a methacrylic group (-OCOCH(CH₃)=CH₂), an oxetanyl group, a vinyl group (-CH=CH₂), an alkynyl group (a group obtained by removing one hydrogen atom from alkyne, and examples thereof include an ethynyl group and a prop-2-yn-1-yl group), a maleimide group, a thiol group (-SH), a hydroxyl group (-OH), and an amino group.

In General Formula (V2), specifically, Y¹¹ represents a monovalent group represented by General Formula (C1) or a monovalent group represented by General Formula (C2), or represents a divalent group which is represented by General Formula (C3) and formed by bonding a plurality of Y¹¹'s to each other, in a case where n¹¹ represents an integer of 2 or greater.

In other words, in a case where n¹¹ is 1, Y¹¹ represents a monovalent group represented by General Formula (C1) or a monovalent group represented by General Formula (C2). In a case where n¹¹ represents an integer of 2 or greater, Y¹¹ represents a monovalent group represented by General Formula (C1) or a monovalent group represented by General Formula (C2), or represents a divalent group which is represented by General Formula (C3) and formed by bonding the plurality of Y¹¹'s to each other. Moreover, in a case where n¹¹ is 2 or greater, the plurality of Y¹¹'s may be the same as or different from each other.

Furthermore, in a case where Y¹¹ represents a divalent group represented by General Formula (C3), the compound represented by General Formula (V2) is represented by General Formula (V4).

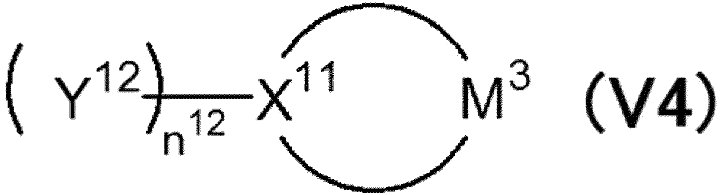

In General Formula (V4), X¹¹, Y¹², and n¹² have the same definitions as X¹¹, Y¹², and n¹² in General Formula (V2), respectively. Moreover, M³ has the same definition as M³ in General Formula (C3).

General Formula (C1): *¹-M¹-Q¹

In General Formula (C1), M¹ represents a single bond or a divalent linking group. For example, the divalent linking group represented by M¹ has the same definition as L¹, and the preferred aspects thereof are also the same.

Q¹ represents a monovalent organic group (a boronic acid group (-B(OH)₂), an aldehyde group (-CHO), an isocyanate group (-N=C=O), an isothiocyanate group (-N=C=S), a cyanate group (-O-CN), an acyl azide group, a succinimide group, a sulfonyl chloride group (-SO₂Cl), a carboxylic acid chloride group (-COCl), an onium group, an aryl halide group, an acid anhydride group (examples thereof include a monovalent acid anhydride group such as maleic acid anhydride, phthalic acid anhydride, pyromellitic acid anhydride, or trimellitic acid anhydride), a phosphonic acid group (-PO(OH)₂), a phosphinic acid group (-HPO(OH)), a phosphoric acid group (-OP(=O)(OH)₂), a phosphate group (-OP(=O)(OR^{B})₂), a sulfonic acid group (-SO₃H), a halogenated alkyl group, a nitrile group (-CN), a nitro group (-NO₂), or a halogen atom (a fluorine atom, a chlorine atom, a bromine atom, and an iodine atom)) in the group Q of functional groups. *¹ represents a position bonded to X¹¹.

General Formula (C2): *²-M²-Q²

In General Formula (C2), M² has the same definition as L², and the preferred aspects thereof are also the same. Q² represents a monovalent organic group. For example, the monovalent linking group represented by Q² has the same definition as P², and the preferred aspects thereof are also the same. *² represents a position bonded to X¹¹.

General Formula (C3): *³¹-M³-*³²

In General Formula (C3), M³ has the same definition as L³, and the preferred aspects thereof are also the same. *³¹ and *³² represent positions bonded to X¹¹. That is, M³ forms a ring together with two different carbon atoms on a fused-ring structure represented by X¹¹.

Y¹² represents a monovalent group represented by General Formula (D1) or a monovalent group represented by General Formula (D2).

General Formula (D1): *¹-W¹-R¹

In General Formula (D1), W¹ represents a single bond or a divalent linking group. R¹ represents a carboxylic acid group, an alkoxysilyl group, an acrylic group, a methacrylic group, an oxetanyl group, a vinyl group, an alkynyl group, a maleimide group, a thiol group, a hydroxyl group, or an amino group. *¹ represents a position bonded to X¹¹. Moreover, R¹ represents a functional group exemplified in the group R of functional groups.

For example, the divalent linking group represented by W¹ has the same definition as L¹, and the preferred aspects thereof are also the same.

*¹ represents a position bonded to X¹¹.

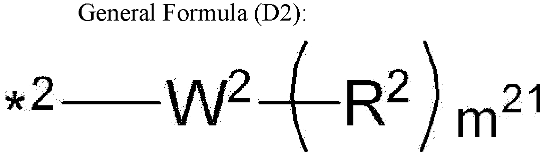

In General Formula (D2), W² represents an (m²¹ + 1)-valent linking group.

m²¹ represents an integer of 2 or greater. The upper limit value of m²¹ is, for example, 100 or less, preferably 30 or less, more preferably 20 or less, and even more preferably 15 or less. The lower limit value of m²¹ is preferably 4 or greater.

R² represents a carboxylic acid group, an alkoxysilyl group, an acrylic group, a methacrylic group, an oxetanyl group, a vinyl group, an alkynyl group, a maleimide group, a thiol group, a hydroxyl group, or an amino group. Moreover, R² represents a functional group exemplified in the group R of functional groups.

For example, the (m²¹ + 1)-valent linking group represented by W² has the same definition as L⁴, and the preferred aspects thereof are also the same.

*² represents a position bonded to X¹¹.

A molecular weight of the surface modifier A is, for example, 150 or greater, is preferably 200 or greater from the viewpoint that the dispersibility of the surface-modified inorganic substance (preferably, the surface-modified inorganic nitride) is superior, and is preferably 2,000 or less and more preferably 1,000 or less from the viewpoint of solubility.

### <Surface modifier B>

As the surface modifier (preferably, the surface modifier for an inorganic nitride), the surface modifier B described below is also preferable.

The surface modifier B is a compound represented by General Formula (B01).

### (Compound represented by General Formula (B01))

X^{B}-[-(L^{1B})_{mB}-Z^{B}]_{nB} (B01)

In General Formula (B01), mB represents an integer of 0 or greater (preferably 0 to 10), and in a case where mB is 0, Z^{B} is directly bonded to X^{B}.

nB represents an integer 3 to 6.

X^{B} represents a benzene ring group or a heterocyclic group (preferably, a triazine ring group), which may have a substituent.

L^{1B} represents an arylene group which may have a substituent, an ester group, an ether group, a thioester group, a thioether group, a carbonyl group, -NR^{N}-, an azo group, or an unsaturated hydrocarbon group which may have a substituent. (R^{N} represents a hydrogen atom or a substituent)

Z^{B} represents an aromatic ring group which may have a substituent.

A plurality of mB's may be the same as or different from each other.

In a case where there are a plurality of L^{1B}'s, the plurality of L^{1B}'s may be the same as or different from each other.

A plurality of Z^{B}'s may be the same as or different from each other.

### (Compound represented by General Formula (B02))

In particular, the surface modifier B is preferably a compound represented by General Formula (B02).

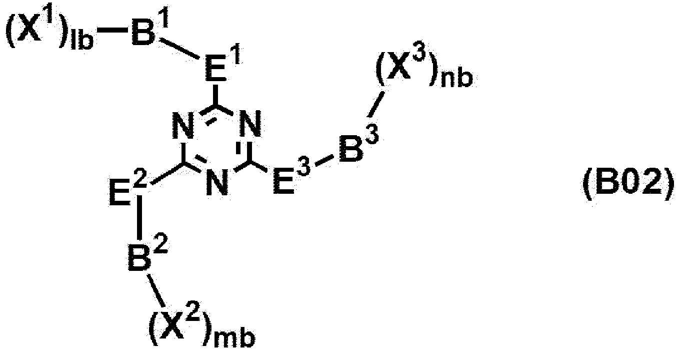

In General Formula (B02), E¹ to E³ each independently represent a single bond, -NH-, or -NR-.

R represents a substituent (preferably a linear or branched alkyl group having 1 to 5 carbon atoms). In a case where there are a plurality of -NR-'s among E¹ to E³, the plurality of R's may be the same as or different from each other.

Among them, from the viewpoint that the thermally conductive properties of the obtained thermally conductive material are superior, E¹ to E³ are each independently preferably a single bond or -NH-. The reason for this is considered to be that in a case where E¹ to E³ are each the aforementioned group, an interaction between the compound represented by General Formula (B02) and the inorganic substance (in particular, the inorganic nitride) is further enhanced.

In General Formula (B02), B¹ to B³ each independently represent an aromatic ring group which may have a substituent and has 6 or more carbon atoms as ring member atoms.

Moreover, B¹ to B³ are bonded to E¹ to E³ and X¹ to X³, respectively, via the ring member atom of the aromatic ring group.

The aromatic ring group may be a monocyclic aromatic ring group or a polycyclic aromatic ring group.

The number of membered rings in the monocyclic aromatic ring group is preferably 6 to 10.

The number of rings constituting the polycyclic aromatic ring group is preferably 2 to 4 and more preferably 2. The numbers of membered rings in the rings constituting the polycyclic aromatic ring group are each independently preferably 5 to 10.

The aromatic ring group may be an aromatic hydrocarbon ring group or an aromatic heterocyclic group.

The number of heteroatoms contained in the aromatic heterocyclic group is preferably 1 to 5. Examples of the heteroatom include a nitrogen atom, a sulfur atom, an oxygen atom, a selenium atom, a tellurium atom, a phosphorus atom, a silicon atom, and a boron atom. Among them, a nitrogen atom, a sulfur atom, or an oxygen atom is preferable.

A substituent that the aromatic ring groups represented by B¹ to B³ may have is preferably a substituent other than the substituent represented by General Formula (B2R). Here, in a case where an atom in B¹ present adjacent to an atom in B¹ to which E¹ is directly bonded has a substituent, the substituent may be a hydroxyl group. In a case where an atom in B² present adjacent to an atom in B² to which E² is directly bonded has a substituent, the substituent may be a hydroxyl group. In a case where an atom in B³ present adjacent to an atom in B³ to which E³ is directly bonded has a substituent, the substituent may be a hydroxyl group.

In a case where the aromatic ring groups represented by B¹ to B³ each have a plurality of substituents, the plurality of substituents may be bonded to each other to form a non-aromatic ring.

The number of carbon atoms, which are ring member atoms, in each of the aromatic ring groups represented by B¹ to B³ is 6 or more (preferably 6 to 12). The number of carbon atoms, which are ring member atoms, means the number of carbon atoms which are ring member atoms constituting an aromatic ring.

Moreover, in a case where the aromatic ring group has a plurality of substituents, and the plurality of substituents may be bonded to each other to form a non-aromatic ring, the number of carbon atoms contained only in the non-aromatic ring is not counted in the number of carbon atoms which are ring member atoms. Furthermore, carbon atoms shared by the aromatic ring and the non-aromatic ring in the aromatic ring group are counted as the number of carbon atoms which are ring member atoms.

Examples of B¹ to B³ include a benzene ring group, a naphthalene ring group, an anthracene ring group, a benzothiazole ring group, a carbazole ring group, and an indole ring group.

Among them, B¹ to B³ are each independently preferably a benzene ring group or a naphthalene ring group.

In General Formula (B02), lb, mb, and nb each independently represent an integer of 0 or greater.

lb, mb, and nb are each independently preferably 0 to 5 and more preferably 1 or 2.

Moreover, in a case where lb is 0, B¹ does not have X¹. In a case where mb is 0, B² does not have X². In a case where nb is 0, B³ does not have X³.

For example, in a case where mb is 0, the compound represented by General Formula (B02) is a compound represented by the following general formula.

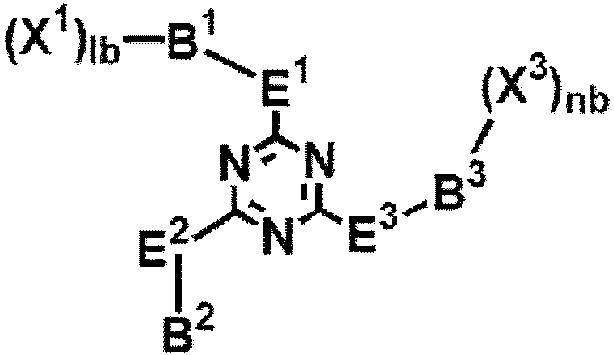

In a case where lb is 2 or greater (that is, in a case where there are a plurality of X¹'s), the plurality (lb pieces) of X¹'s may be the same as or different from each other. In a case where mb is 2 or greater (that is, in a case where there are a plurality of X²'s), the plurality (mb pieces) of X²'s may be the same as or different from each other. In a case where nb is 2 or greater (that is, in a case where there are a plurality of X³'s), the plurality (nb pieces) of X³'s may be the same as or different from each other.

In General Formula (B02), X¹ to X³ each independently represent a group represented by General Formula (B2R).

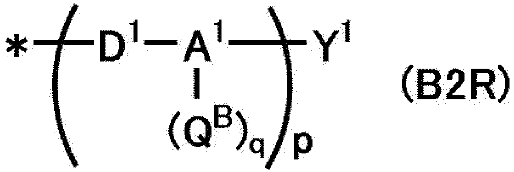

In General Formula (B2R), * represents a position bonded to any one of B¹, ..., or B³.

In General Formula (B2R), D¹ represents a single bond or a divalent linking group.

Examples of the divalent linking group include -O-, -S-, -CO-, -NR^{N}-, -SO₂-, an alkylene group, and a group consisting of a combination thereof. R^{N} in -NR^{N}- represents a hydrogen atom or a substituent. The alkylene group is preferably a linear or branched alkylene group having 1 to 8 carbon atoms.

Among them, D¹ is preferably a "single bond" or a "group consisting of a combination selected from the group consisting of -O-, -CO-, and an alkylene group", and more preferably a single bond, *^{A}-alkylene group-O-CO-*^{B}, *^{A}-CO-O-alkylene group-*^{B}, *^{A}-O-alkylene group-O-*^{B}, *^{A}-CO-O-alkylene group-O-CO-*^{B}, *^{A}-CO-O-alkylene group-O-*^{B}, or *^{A}-O-alkylene group-O-CO-*^{B}.

*^{A} is a bonding position on a side opposite to A¹, and *^{B} is a position bonded to A¹.

In General Formula (B2R), A¹ represents an aromatic ring group which may have a substituent and has 6 or more carbon atoms as ring member atoms, or a cycloalkane ring group which may have a substituent and has 6 or more carbon atoms as ring member atoms.

Moreover, A¹ is bonded to D¹, Y¹, and Q^{B} via the ring member atom of the aromatic ring group or the cycloalkane ring group.

The aromatic ring group, which may have a substituent and has 6 or more carbon atoms as ring member atoms, in A¹ is the same as the aromatic ring group, which may have a substituent and has 6 or more carbon atoms as ring member atoms, in B¹ to B³.

In the cycloalkane ring group, which may have a substituent and has 6 or more carbon atoms as ring member atoms, in A¹, the cycloalkane ring group may be monocyclic or polycyclic.

The number of membered rings in the monocyclic cycloalkane ring group is preferably 6 to 10.

The number of rings constituting the polycyclic cycloalkane ring group is preferably 2 to 4 and more preferably 2. The numbers of membered rings in the rings constituting the polycyclic cycloalkane ring group are each independently preferably 5 to 10.

In a case where the cycloalkane ring group has a plurality of substituents, the plurality of substituents may be bonded to each other to form a ring other than the cycloalkane ring.

The number of carbon atoms, which are ring member atoms, in the cycloalkane ring group is 6 or more (preferably 6 to 12). The number of carbon atoms, which are ring member atoms, means the number of carbon atoms which are ring member atoms constituting a cycloalkane ring.

In a case where the cycloalkane ring group has a plurality of substituents, and the plurality of substituents may be bonded to each other to form a ring other than the cycloalkane ring, the number of carbon atoms contained only in the ring other than the cycloalkane ring is not counted in the number of carbon atoms which are ring member atoms. Moreover, carbon atoms shared by the cycloalkane ring and the ring other than the cycloalkane ring in the cycloalkane ring group are counted as the number of carbon atoms which are ring member atoms.

Examples of the cycloalkane ring group, which may have a substituent and has 6 or more carbon atoms as ring member atoms, in A¹ include a cyclohexane ring group, a cycloheptane ring group, a norbornane ring group, and an adamantane ring group.

In General Formula (B2R), Q^{B} and Y¹ each independently represent a specific functional group selected from the group consisting of an aldehyde group (-CHO), a boronic acid group (-B(OH)₂), a hydroxyl group (-OH), a monovalent group having an epoxy group, an amino group, a thiol group (-SH), a carboxylic acid group (-COOH), a monovalent group having a carboxylic acid anhydride group, an isocyanate group (-NCO), and a monovalent group having an oxetanyl group.

That is, the group represented by General Formula (B2R) is a group having at least one specific functional group. Here, the expression in which the group represented by General Formula (B2R) is a "group having the specific functional group" means that the group represented by General Formula (B2R) may be a group having the specific functional group as a part, or the group represented by General Formula (B2R) may be the specific functional group.

The monovalent group having an epoxy group as the specific functional group is preferably a group represented by "-L^{eo}-epoxy group". L^{eo} is a single bond or a divalent linking group, and is preferably an oxygen atom, an alkylene group (preferably, a linear or branched alkylene group having 1 to 6 carbon atoms), or a group consisting of a combination thereof.

Among them, the monovalent group having an epoxy group is preferably "-O-alkylene group-epoxy group".

Moreover, a substituent that the epoxy group may have is preferably a linear or branched alkyl group having 1 to 6 carbon atoms.

The amino group as the specific functional group is not particularly limited, and may be any one of a primary amino group, a secondary amino group, or a tertiary amino group. Examples thereof include an amino group represented by -N(R^{E})₂ (R^{E}'s are each independently represent a hydrogen atom or an alkyl group (which may be linear or branched)). The number of carbon atoms in the alkyl group is preferably 1 to 10, more preferably 1 to 6, and even more preferably 1 to 3. Moreover, the alkyl group may further have a substituent).

Examples of the monovalent group having a carboxylic acid anhydride group as the specific functional group include a group obtained by removing any hydrogen atom from maleic acid anhydride, phthalic acid anhydride, pyromellitic acid anhydride, and trimellitic acid anhydride.

As the monovalent group having an oxetanyl group as the specific functional group, for example, a group represented by "-L^{eo}-oxetanyl group" is preferable. L^{eo} is a single bond or a divalent linking group, and is preferably an oxygen atom, an alkylene group (preferably, a linear or branched alkylene group having 1 to 6 carbon atoms), or a group consisting of a combination thereof.

Among them, the monovalent group having an oxetanyl group is preferably "-O-alkylene group-oxetanyl group".

Moreover, a substituent that the oxetanyl group may have is preferably a linear or branched alkyl group having 1 to 6 carbon atoms.

Among them, the specific functional group is preferably an aldehyde group, a boronic acid group, a hydroxyl group, or a monovalent group having an epoxy group.

In other words, Q^{B} and Y¹ are each independently preferably an aldehyde group, a boronic acid group, a hydroxyl group, or a monovalent group having an epoxy group.

In General Formula (B2R), p represents an integer of 0 or greater.

Among them, p is preferably 0 to 5 and more preferably 0 or 1.

In a case where p is 0, Y¹ is directly bonded to any one of B¹, ..., or B³. That is, X¹ to X³ may be the specific functional groups.

In General Formula (B2R), q represents an integer of 0 to 2.

Among them, q is preferably 0 or 1.

Furthermore, in a case where a plurality of groups represented by General Formula (B2R) are present in the compound represented by General Formula (B02), the plurality of groups represented by General Formula (B2R) may be the same as or different from each other.

For example, in General Formula (B2R), in a case where there are a plurality of D¹'s, the plurality of D¹'s may be the same as or different from each other. In a case where there are a plurality of A¹'s, the plurality of A¹'s may be the same as or different from each other. In a case where there are a plurality of Q^{B}'s, the plurality of Q^{B}'s may be the same as or different from each other. In a case where there are a plurality of Y¹'s, the plurality of Y¹'s may be the same as or different from each other. In a case where there are a plurality of p's, the plurality of p's may be the same as or different from each other. In a case where there are a plurality of q's, the plurality of q's may be the same as or different from each other.

In General Formula (B02), the total number of lb's, mb's, and nb's is 2 or greater (preferably 2 to 10 and more preferably 3 to 6).

In other words, the total number of X¹'s to X³'s, which may each be present in a plurality of numbers, is 2 or greater (preferably 2 to 10 and more preferably 3 to 6).

That is, in General Formula (B02), the total number of the number of X¹'s which may be present in a plurality of numbers, the number of X²'s which may be present in a plurality of numbers, and the number of X³'s which may be present in a plurality of numbers is 2 or greater, preferably 2 to 10, and more preferably 3 to 6.

For example, lb is preferably 1 or greater (more preferably 1 or 2), mb is preferably 1 or greater (more preferably 1 or 2), and nb is preferably 1 or greater (more preferably 1 or 2).

That is, B¹ preferably has one or more (more preferably one or two) X¹'s, B² preferably has one or more (more preferably one or two) X²'s, and B³ preferably has one or more (more preferably one or two) X³'s.

Here, in a case where lb is 1 or greater and at least one X¹ is a hydroxyl group, it is preferable that an atom in B¹ to which X¹, which is a hydroxyl group, is directly bonded and an atom in B¹ to which E¹ is directly bonded are not adjacent to each other.

In a case where mb is 1 or greater and at least one X² is a hydroxyl group, it is preferable that an atom in B² to which X², which is a hydroxyl group, is directly bonded and an atom in B² to which E² is directly bonded are not adjacent to each other.

In a case where nb is 1 or greater and at least one X³ is a hydroxyl group, it is preferable that an atom in B³ to which X³, which is a hydroxyl group, is directly bonded and an atom in B³ to which E³ is directly bonded are not adjacent to each other.

For example, in a case where B¹ is a benzene ring group, and the benzene ring group has a hydroxyl group at an ortho position of E¹, the hydroxyl group does not correspond to X¹, and thus may not be counted in the aforementioned "number of X¹'s which may be present in a plurality of numbers".

The present inventors consider that the hydroxyl groups present at positions on B¹ to B³ adjacent to E¹ to E³ are greatly affected by steric hindrance, and less likely to form a favorable thermal conduction path between the inorganic substances (inorganic nitrides and the like), and thus hydroxyl groups present at different positions have an excellent effect of improving the thermally conductive properties.

For example, the atom in B¹ to which E¹ is directly bonded, and an atom (preferably, a carbon atom) in B¹ present adjacent to the atom are preferably unsubstituted. The atom in B² to which E² is directly bonded, and an atom (preferably, a carbon atom) in B² present adjacent to the atom are preferably unsubstituted. The atom in B³ to which E³ is directly bonded, and an atom (preferably, a carbon atom) in B³ present adjacent to the atom are preferably unsubstituted.

The compound represented by General Formula (B02) may have one kind of the groups represented by General Formula (B2R) alone, and may have two or more kinds thereof.

Among them, the compound represented by General Formula (B02) is preferably a "compound having only a hydroxyl group as the specific functional group", a "compound having only a monovalent group having an epoxy group as the specific functional group", or a "compound having, as the specific functional group, a group (preferably, a hydroxyl group) which is neither an aldehyde group nor a boronic acid group, and an aldehyde group and/or a boronic acid group".

Furthermore, as the "compound having, as the specific functional group, both a group which is neither an aldehyde group nor a boronic acid group, and an aldehyde group and/or a boronic acid group", for example, a compound in which in the compound represented by General Formula (B02), a total of one or more among lb pieces of X¹'s, mb pieces of X²'s, and nb pieces of X³'s (that is, among (lb + mb + nb) pieces of groups represented by General Formula (B2R)) each are a group having at least one specific functional group of an aldehyde group or a boronic acid group, and a total of one or more (preferably one to four) among lb pieces of X¹'s, mb pieces of X²'s, and nb pieces of X³'s (that is, among (lb + mb + nb) pieces of groups represented by General Formula (B2R)) each are a group having a specific functional group which is neither an aldehyde group nor a boronic acid group is preferable.

It is preferable that the "group having at least one specific functional group of an aldehyde group or a boronic acid group", and the "group having a specific functional group which is neither an aldehyde group nor a boronic acid group" are present as separate groups.

The "specific functional group which is neither an aldehyde group nor a boronic acid group" is preferably a hydroxyl group or a monovalent group having an epoxy group, and more preferably a hydroxyl group.

It is also preferable that the "group having at least one specific functional group of an aldehyde group or a boronic acid group" does not have any "specific functional group which is neither an aldehyde group nor a boronic acid group".

Moreover, it is also preferable that the "group having a specific functional group which is neither an aldehyde group nor a boronic acid group" has neither an aldehyde group nor a boronic acid group.

By satisfying such conditions, the thermally conductive properties of the obtained thermally conductive material are superior. As a mechanism thereof, the present inventors estimate as follows.

That is, in a case where the compound represented by General Formula (B02) has an aldehyde group and/or a boronic acid group as the specific functional group, the aldehyde group and/or the boronic acid group particularly favorably interacts with the inorganic substance (in particular, an inorganic nitride such as boron nitride).

In a case where the compound represented by General Formula (B02) further has other specific functional groups in addition to the aldehyde group and/or the boronic acid group, the aldehyde group and/or the boronic acid group interacts mainly with the inorganic substance (in particular, inorganic nitride), while the other specific functional groups form a thermal conduction path by an interaction with a substance other than the inorganic substance (for example, between the compounds represented by General Formula (B02)), and thus the thermally conductive properties of the obtained thermally conductive material are superior. Moreover, it is estimated that the other specific functional groups may form an interaction with a resin consisting of the phenolic compound and/or the epoxy compound (the compound represented by General Formula (1), or the like) through chemical bonding, and in this case, the thermally conductive properties of the obtained thermally conductive material are superior.

### (Compound represented by General Formula (B03))

Among them, the compound represented by General Formula (B02) is preferably a compound represented by General Formula (B03).

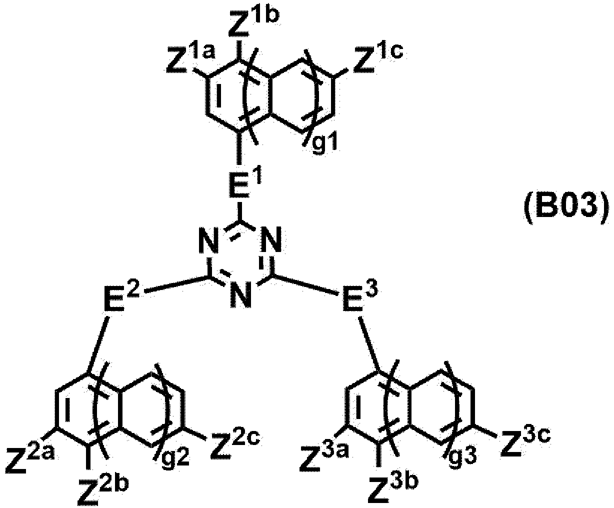

In General Formula (B03), E¹ to E³ each independently represent a single bond, -NH-, or -NR-. R represents a substituent.

E¹ to E³ in General Formula (B03) are the same as E¹ to E³ in General Formula (B02), respectively.

In General Formula (B03), g¹ to g³ each independently represent an integer of 0 or 1.

In General Formula (B03), Z^{1a} to Z^{1c}, Z^{2a} to Z^{2c}, and Z^{3a} to Z^{3c} each independently represent a hydrogen atom or the group represented by General Formula (B2R).

Here, a total of two or more (preferably two to nine and more preferably three to six) among Z^{1a} to Z^{1c}, Z^{2a} to Z^{2c}, and Z^{3a} to Z^{3c} are the groups represented by General Formula (B2R).

The groups represented by General Formula (B2R) are as described above.

It is preferable that one or more (preferably one or two) among Z^{1a} to Z^{1c} are the groups represented by General Formula (B2R), one or more (preferably one or two) among Z^{2a} to Z^{2c} are the groups represented by General Formula (B2R), and one or more (preferably one or two) among Z^{3a} to Z^{3c} are the groups represented by General Formula (B2R).

Among them, it is preferable that Z^{1a} to Z^{1c}, Z^{2a} to Z^{2c}, and Z^{3a} to Z^{3c} are each independently a "group selected from the group consisting of a hydrogen atom and a group represented by General Formula (B2R) in which the specific functional group is a hydroxyl group", or a "group selected from the group consisting of a hydrogen atom and a group represented by General Formula (B2R) in which the specific functional group is a monovalent group having an epoxy group".

In addition, one or more (preferably one or two) among Z^{1a} to Z^{1c}, Z^{2a} to Z^{2c}, and Z^{3a} to Z^{3c} each are a group which is represented by General Formula (B2R) and has at least one specific functional group of an aldehyde group or a boronic acid group, and it is also preferable that one or more (preferably one to four) among Z^{1a} to Z^{1c}, Z^{2a} to Z^{2c}, and Z^{3a} to Z^{3c} each are a group which is represented by General Formula (B2R) and has a specific functional group that is neither an aldehyde group nor a boronic acid group.

Among them, it is more preferable that one or more (preferably one or two) among Z^{1a} to Z^{1c} each are a group which is represented by General Formula (B2R) and has at least one specific functional group of an aldehyde group or a boronic acid group, one or more (preferably one or two) among Z^{2a} to Z^{2c} each are a group which is represented by General Formula (B2R) and has a specific functional group that is neither an aldehyde group nor a boronic acid group, and one or more (preferably one or two) among Z^{3a} to Z^{3c} each are a group which is represented by General Formula (B2R) and has a specific functional group that is neither an aldehyde group nor a boronic acid group.

The "specific functional group which is neither an aldehyde group nor a boronic acid group" is preferably a hydroxyl group or a monovalent group having an epoxy group, and more preferably a hydroxyl group.

It is also preferable that the "group which is represented by General Formula (B2R) and has a specific functional group that is neither an aldehyde group nor a boronic acid group" does not have any "specific functional group which is neither an aldehyde group nor a boronic acid group".

Moreover, it is also preferable that the "group which is represented by General Formula (B2R) and has a specific functional group that is neither an aldehyde group nor a boronic acid group" has neither an aldehyde group nor a boronic acid group.

### <Other surface modifiers (surface modifier for inorganic oxide)>

In addition, it is also preferable that the composition (preferably, in a case where the inorganic substance includes an inorganic oxide (aluminum oxide or the like)) contains an organic silane molecule (preferably, a compound having an alkoxysilyl group) as the surface modifier. Examples of the organic silane molecule include other surface modifiers which do not correspond to any one of the surface modifier A or the surface modifier B.

The organic silane molecules, which are such other surface modifiers, are preferably used as a surface modifier for an inorganic oxide (preferably, a surface modifier for aluminum oxide).

Examples of the organic silane molecules which are the other surface modifiers include 3-aminopropyl triethoxysilane, 3-(2-aminoethyl)aminopropyl triethoxysilane, 3-aminopropyl trimethoxysilane, 3-(2-aminoethyl)aminopropyl trimethoxysilane, N-phenyl-3-aminopropyl trimethoxysilane, 3-mercapto triethoxysilane, and 3-ureidopropyl triethoxysilane.

The surface modifier may be used alone or in combination of two or more kinds thereof.

In a case where the composition contains the surface modifier (preferably, the surface modifier for an inorganic nitride and/or the surface modifier for an inorganic oxide), a content of the surface modifier is preferably 0.01% to 10% by mass and more preferably 0.05% to 5% by mass, with respect to the total solid content of the composition.

Moreover, the content (preferably, the total content of the surface modifier A and the surface modifier B) of the surface modifier for an inorganic nitride is preferably 0.01% to 10% by mass and more preferably 0.05% to 5% by mass, with respect to the total solid content of the composition.

The content of the surface modifier for an inorganic oxide (preferably, the organic silane molecules which are the other surface modifiers) is preferably 0.01% to 10% by mass and more preferably 0.05% to 5% by mass, with respect to the total solid content of the composition.

In a case where the composition contains the surface modifier (preferably, the surface modifier for an inorganic nitride and/or the surface modifier for an inorganic oxide), the content of the surface modifier is preferably 0.01% to 10% by mass and more preferably 0.10% to 5% by mass, with respect to the total mass of the inorganic substance.

Moreover, the content (preferably, the total content of the surface modifier A and the surface modifier B) of the surface modifier for an inorganic nitride is preferably 0.01% to 10% by mass and more preferably 0.10% to 5% by mass, with respect to the total mass of the inorganic nitride (preferably, boron nitride).

The content of the surface modifier for an inorganic oxide (preferably, the organic silane molecules which are the other surface modifiers) is preferably 0.01% to 10% by mass and more preferably 0.10% to 5% by mass, with respect to the total mass of the inorganic oxide (preferably, aluminum oxide).

In the composition according to the embodiment of the present invention, a ratio (the total number of phenolic hydroxyl groups contained in the solid content/the total number of epoxy groups contained in the solid content) of the total number of phenolic hydroxyl groups contained in the solid content (for example, the total number of the number of phenolic hydroxyl groups contained in the phenolic compound represented by General Formula (1), the number of phenolic hydroxyl groups contained in the other phenolic compounds, and the number of phenolic hydroxyl groups contained in the surface modifier having the phenolic hydroxyl group) to the total number of the number of epoxy groups contained in the solid content (for example, the total number of the number of epoxy groups contained in the epoxy compound and the number of epoxy groups contained in the surface modifier having the epoxy group) is preferably 0.50 to 2.00, more preferably 0.65 to 1.50, and even more preferably 0.90 to 1.10.

In the composition according to the embodiment of the present invention, a ratio (the total number of active hydrogen atoms contained in the solid content/the total number of the number of epoxy groups contained in the solid content) of the total number of active hydrogen atoms (hydrogen atoms of the phenolic hydroxyl group, and the like) contained in the solid content to the total number of the number of epoxy groups contained in the solid content is preferably 0.50 to 2.00, more preferably 0.65 to 1.50, and even more preferably 0.90 to 1.10.

### [Curing accelerator]

The composition may further contain a curing accelerator.

Examples of the curing accelerator include triphenylphosphine, a boron trifluoride-amine complex, and the compound described in paragraph 0052 in JP2012-67225A. In addition to the aforementioned curing accelerators, examples thereof include imidazole-based curing accelerators such as 2-methylimidazole (trade name; 2MZ), 2-undecylimidazole (trade name; C11-Z), 2-heptadecylimidazole (trade name; C17Z), 1,2-dimethylimidazole (trade name; 1.2DMZ), 2-ethyl-4-methylimidazole (trade name; 2E4MZ), 2-phenylimidazole (trade name; 2PZ), 2-phenyl-4-methylimidazole (trade name; 2P4MZ), 1-benzyl-2-methylimidazole (trade name; 1B2MZ), 1-benzyl-2-phenylimidazole (trade name; 1B2PZ), 1-cyanoethyl-2-methylimidazole (trade name; 2MZ-CN), 1-cyanoethyl-2-undecylimidazole (trade name; C11Z-CN), 1-cyanoethyl-2-phenylimidazolium trimellitate (trade name; 2PZCNS-PW), 2,4-diamino-6-[2'-methylimidazolyl-(1')]-ethyl-s-triazine (trade name; 2MZ-A), 2,4-diamino-6-[2'-undecylimidazolyl-(1')]-ethyl-s-triazine (trade name; C11Z-A), 2,4-diamino-6-[2'-ethyl-4'-methylimidazolyl-(1')]-ethyl-s-triazine (trade name; 2E4MZ-A), 2,4-diamino-6-[2'-methylimidazolyl-(1')]-ethyl-s-triazine isocyanuric acid adduct (trade name; 2MA-OK), 2-phenyl-4,5-dihydroxymethylimidazole (trade name; 2PHZ-PW), 2-phenyl-4-methyl-5-hydroxymethylimidazole (trade name; 2P4MHZ-PW), and 1-cyanoethyl-2-phenylimidazole (trade name; 2PZ-CN) (all produced by SHIKOKU CHEMICALS CORPORATION).

The curing accelerator may be used alone or in combination of two or more kinds thereof.

In a case where the composition contains the curing accelerator, a content of the curing accelerator is preferably 0.01% to 10% by mass and more preferably 0.1% to 5% by mass, with respect to the total content of the phenolic compounds (the phenolic compound represented by General Formula (1) and the other phenolic compounds) and the epoxy compounds.

### [Dispersant]

The composition may further contain a dispersant.

In a case where the composition contains a dispersant, the dispersibility of the inorganic substance in the composition is improved, and thus superior thermal conductivity and adhesiveness can be achieved.

The dispersant can be appropriately selected from, for example, commonly used dispersants. Examples thereof include DISPERBYK-106 (produced by BYK-Chemie GmbH), DISPERBYK-111 (produced by BYK-Chemie GmbH), ED-113 (produced by Kusumoto Chemicals, Ltd.), AJISPER PN-411 (produced by Ajinomoto Fine-Techno Co., Inc.), and REB122-4 (produced by Showa Denko Materials co., Ltd.).

The dispersant may be used alone or in combination of two or more kinds thereof.

In a case where the composition contains the dispersant, a content of the dispersant is preferably 0.01% to 10% by mass and more preferably 0.1% to 5% by mass, with respect to the content of the inorganic substance.

### [Solvent]

The composition may further contain a solvent.

A kind of the solvent is not particularly limited, and an organic solvent is preferable. Examples of the organic solvent include cyclopentanone, cyclohexanone, ethyl acetate, methyl ethyl ketone, dichloromethane, and tetrahydrofuran.

In a case where the composition contains a solvent, a content of the solvent is preferably an amount such that the concentration of the solid contents in the composition is 20% to 90% by mass, more preferably an amount such that the concentration is 30% to 85% by mass, and even more preferably an amount such that the concentration is 40% to 85% by mass.

### [Method for producing composition]

A method for producing the composition is not particularly limited, known methods can be adopted, and for example, the composition can be produced by mixing the aforementioned various components. In a case of mixing, the various components may be mixed at a time or mixed sequentially.

A method for mixing the components is not particularly limited, and known methods can be used. A mixing device used for the mixing is preferably a submerged disperser, and examples thereof include a rotating and revolving mixer, a stirrer such as a high-speed rotating shear-type stirrer, a colloid mill, a roll mill, a high-pressure injection-type disperser, an ultrasonic disperser, a beads mill, and a homogenizer. The mixing device may be used alone or in combination of two or more kinds thereof. A deaeration treatment may be performed before and after the mixing and/or simultaneously with the mixing.

### [Method for curing composition]

The composition according to the embodiment of the present invention is preferably a composition for forming a thermally conductive material.

The composition according to the embodiment of the present invention is subjected to a curing treatment to obtain a thermally conductive material.

A method for curing the composition is not particularly limited, but a thermal curing reaction is preferable.

A heating temperature during the thermal curing reaction is not particularly limited. For example, the heating temperature may be appropriately selected within the range of 50°C to 250°C. Moreover, in a case where the thermal curing reaction is performed, a heating treatment at different temperatures may be performed a plurality of times.

The curing treatment is preferably performed on the composition which is formed in a film shape or a sheet shape. Specifically, for example, the composition may be applied to form a film, and a curing reaction may be performed.

In a case where the curing treatment is performed, it is preferable to apply the composition onto a substrate to form a coating film, and then cure the coating film. **In** this case, after further bringing the coating film formed on the substrate into contact with another substrate, the curing treatment may be performed. A cured substance (thermally conductive material) obtained after the curing may or may not be separated from one or both of the substrates.

Furthermore, in a case where the curing treatment is performed, after applying the composition onto different substrates to form respective coating films, the curing treatment may be performed in a state where the obtained coating films are in contact with each other. A cured substance (thermally conductive material) obtained after the curing may or may not be separated from one or both of the substrates.

During the curing treatment, press working may be performed. A press used for the press working is not limited, and for example, a flat plate press may be used, or a roll press may be used.

In a case where the roll press is used, for example, it is preferable that a substrate with a coating film, which is obtained by forming a coating film on a substrate, is sandwiched between a pair of rolls in which two rolls face each other, and while rotating the pair of rolls to cause the substrate with a coating film to be passed, a pressure is applied in a film thickness direction of the substrate with a coating film. In the substrate with a coating film, a substrate may be present on only one surface of a coating film, or a substrate may be present on both surfaces of a coating film. The substrate with a coating film may be passed through the roll press only once or a plurality of times.

Only one of the treatment with the flat plate press and the treatment with the roll press may be performed, or both the treatments may be performed.

In addition, the curing treatment may be completed when the composition is in a semi-cured state. The semi-cured thermally conductive material according to the embodiment of the present invention may be disposed so as to be in contact with a device to be used or the like, and then further cured by heating or the like to be finally cured. It is also preferable that the device and the thermally conductive material according to the embodiment of the present invention adhere to each other by heating or the like during the final curing.

Regarding the preparation of the thermally conductive material including a curing reaction, "Highly Thermally Conductive Composite Material" (CMC Publishing CO., LTD., written by Yoshitaka TAKEZAWA) can be referred to.

A shape of the thermally conductive material is not particularly limited, and the thermally conductive material can be molded into various shapes according to the use. Examples of a typical shape of the molded thermally conductive material include a sheet shape.

That is, it is also preferable that the thermally conductive material formed of the composition according to the embodiment of the present invention is a thermally conductive sheet.

Furthermore, the thermally conductive properties of the thermally conductive material formed of the composition according to the embodiment of the present invention are preferably isotropic rather than anisotropic.

The thermally conductive material preferably has insulating properties (electrical insulating properties). In other words, the composition according to the embodiment of the present invention is preferably a thermally conductive insulating composition.

For example, a volume resistivity of the thermally conductive material at 23°C and a relative humidity of 65% is preferably 10¹⁰ Ω·cm or greater, more preferably 10¹² Ω·cm or greater, and even more preferably 10¹⁴ Ω·cm or greater. The upper limit thereof is not particularly limited, but is generally 10¹⁸ Ω·cm or less.

### [Use of thermally conductive material]

The thermally conductive material formed of the composition according to the embodiment of the present invention can be used as a heat dissipation material such as a heat dissipation sheet, and can be used for dissipating heat from various devices. More specifically, a device with a thermally conductive layer is prepared by disposing a thermally conductive layer, which contains the thermally conductive material according to the embodiment of the present invention, on a device, and thus the heat generated from the device can be efficiently dissipated by the thermally conductive layer.

The thermally conductive material formed of the composition according to the embodiment of the present invention has sufficient thermally conductive properties and high heat resistance, and thus is suitable for dissipating heat from a power semiconductor device used in various electrical machines such as a personal computer, a general household electric appliance, and an automobile.

Furthermore, the thermally conductive material formed of the composition according to the embodiment of the present invention has sufficient thermally conductive properties even in a semi-cured state, and thus can also be used as a heat dissipation material which is disposed in a portion where light for photocuring is hardly reached, such as a gap between members of various devices. Moreover, the thermally conductive material also has excellent adhesiveness, and thus can also be used as an adhesive having thermally conductive properties.

The thermally conductive material formed of the composition according to the embodiment of the present invention may be used in combination with members other than the members formed of the present composition.

For example, a sheet-shaped thermally conductive material (thermally conductive sheet) may be combined with a sheet-shaped support in addition to the layer formed of the present composition.

Examples of the sheet-shaped support include a plastic film, a metal film, and a glass plate. Examples of a material for the plastic film include polyester such as polyethylene terephthalate (PET), polycarbonate, an acrylic resin, an epoxy resin, polyurethane, polyamide, polyolefin, a cellulose derivative, and silicone. Examples of the metal film include a copper film.

A film thickness of the sheet-shaped thermally conductive material (thermally conductive sheet) is preferably 100 to 300 µm and more preferably 150 to 250 µm.

### Examples

Hereinafter, the present invention will be described in more detail based on Examples.

### [Preparation and evaluation of composition]

### [Various components]

Various components used in Examples and Comparative Examples will be shown below.

### <Phenolic compound>

Phenolic compounds used in Examples and Comparative Examples will be shown below.

Moreover, the following phenolic compounds A-1 to A-13 are each the phenolic compound represented by General Formula (1).

Furthermore, in the following phenolic compounds, Mn indicates a number-average molecular weight of each of the phenolic compounds. The phenolic compounds of which the number-average molecular weight is described are mixtures of compounds which differ only in the value of n. n represents an integer of 0 or greater.

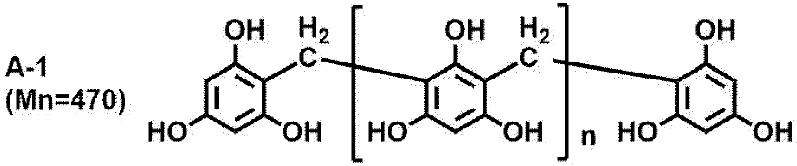

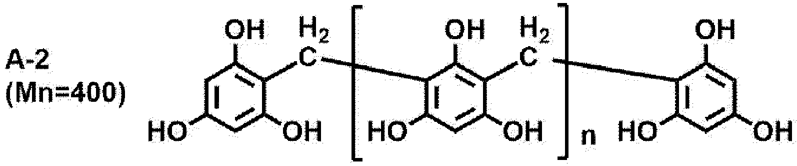

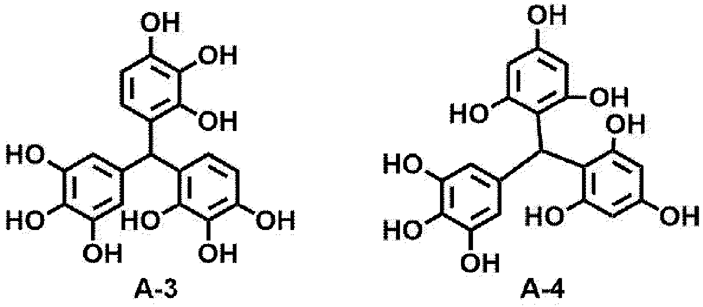

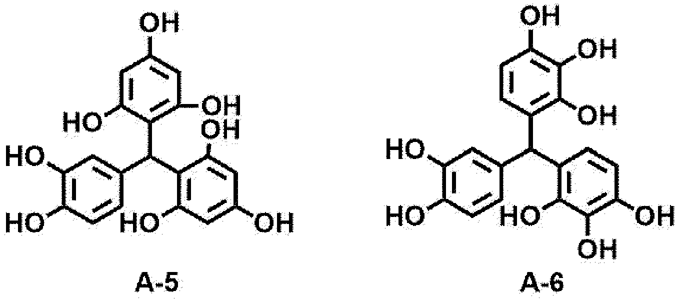

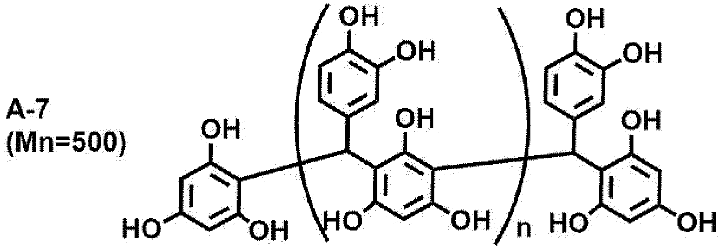

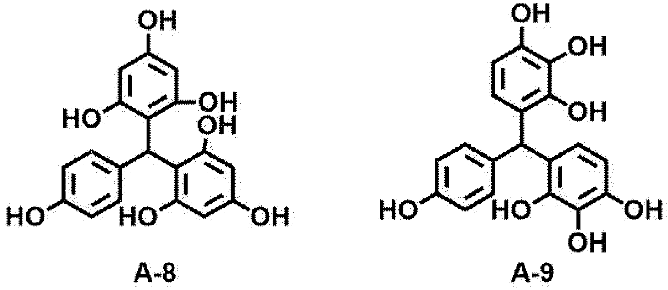

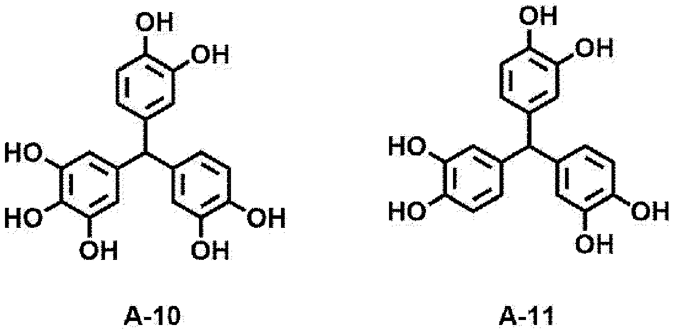

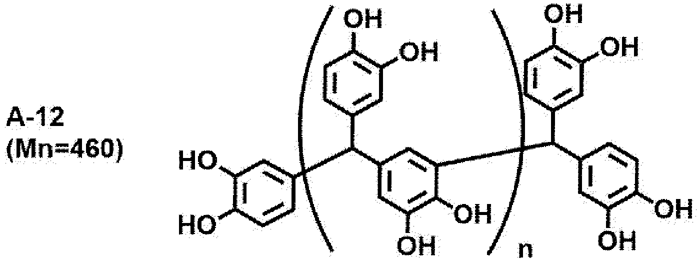

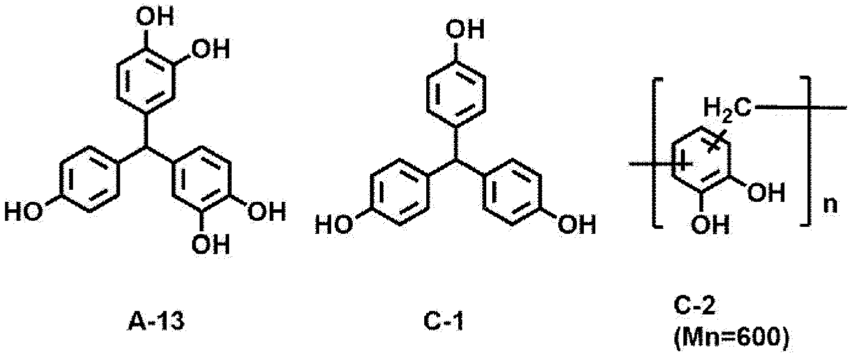

### (Synthesis Example A-1)

The phenolic compound A-1 was obtained by the following method.

In a flask, 30 g of phloroglucinol as a monomer of a phenolic compound and 100 g of water as a solvent were mixed and stirred. 0.6 g of oxalic acid as a catalyst and 14.5 g of 37% by mass formaldehyde water were further added to the flask, and the mixture was stirred at 105°C for 4 hours. After the temperature of the contents of the flask was returned to room temperature, a slurry obtained in the flask was filtered to obtain a crude product (filter substance) of the phenolic compound. The obtained crude product was dissolved in 200 g of acetone, and insoluble matter was removed by the filtration with celite. The acetone was distilled off from the filtrate under reduced pressure, water was further added to obtain a slurry again, and then the slurry was filtered to obtain the phenolic compound A-1 (filter substance).

### (Synthesis Example A-2)

The phenolic compound A-2 was obtained in the same manner as in Synthesis Example A-1, except that the addition amount of the 37% by mass formaldehyde water was 12.9 g.

### (Synthesis Example A-3)

In a flask, 5 g of 3,4,5-trihydroxybenzaldehyde, 30 g of pyrogallol, and 40 ml of ethanol were mixed. The contents of the flask were cooled to 0°C, and 12 ml of a liquid mixture of concentrated sulfuric acid/ethanol of 1/1 (mass ratio) was further added dropwise to the flask. Thereafter, the contents of the flask were reacted at room temperature for 12 hours, the obtained reaction solution was then separated into a liquid mixture of ethyl acetate/tetrahydrofuran (THF) and water, and a reaction product in the reaction solution was extracted into an organic phase. The solvent was distilled off from the organic phase, and the resultant was purified by column chromatography to obtain the phenolic compound A-3.

### (Synthesis Examples A-4 to A-13)

The phenolic compounds A-4 to A-13 were obtained with reference to Synthesis Example A-3.

### <Epoxy compound>

Epoxy compounds used in Examples and Comparative Examples will be shown below.

Moreover, an epoxy compound B-2 is a mixture of two kinds of epoxy compounds (trade name: EPOTOHTO ZX-1059, produced by Tohto Kasei Co., Ltd.).

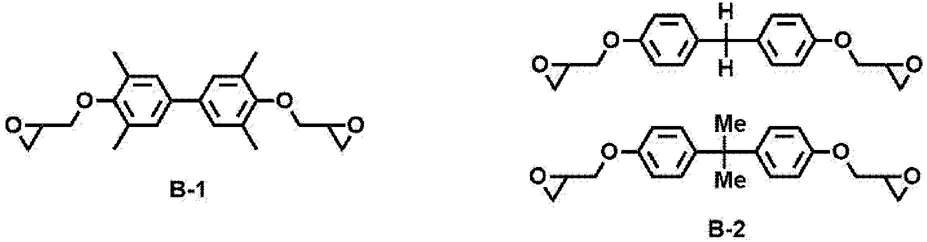

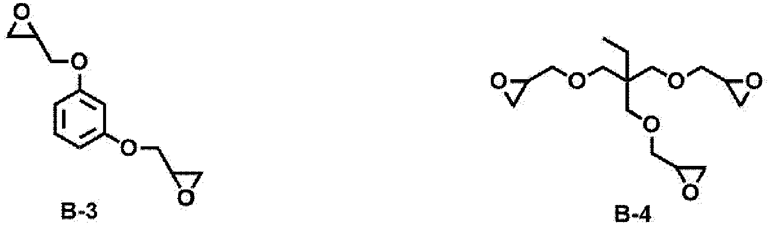

### <Inorganic substances (inorganic nitride and inorganic oxide)>

Inorganic substances used in Examples and Comparative Examples will be shown below.

"AA-3": Aluminum oxide (average particle diameter: 3 µm, produced by Sumitomo Chemical Co., Ltd.)

"AA-04": Aluminum oxide (average particle diameter: 0.4 µm, produced by Sumitomo Chemical Co., Ltd.)

"HP-40 MF100": Aggregation-shaped boron nitride (average particle diameter: 40 µm, produced by MIZUSHIMA FERROALLOY CO., LTD.)

### <Curing accelerator>

Curing accelerators used in Examples and Comparative Examples will be shown below.
"E-1": Triphenylphosphine (PPh₃)
"E-2": 1-Cyanoethyl-2-phenylimidazole (trade name; 2PZ-CN, produced by SHIKOKU CHEMICALS CORPORATION)
"E-3": 2-Phenyl-4,5-dihydroxymethylimidazole (trade name; 2PHZ-PW, produced by SHIKOKU CHEMICALS CORPORATION)

### <Dispersant>

DISPERBYK-106 (polymer salt having an acidic group) was used as the dispersant.

### <Surface modifier>

The following compounds were used as the surface modifier for an inorganic nitride.

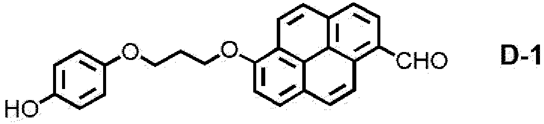

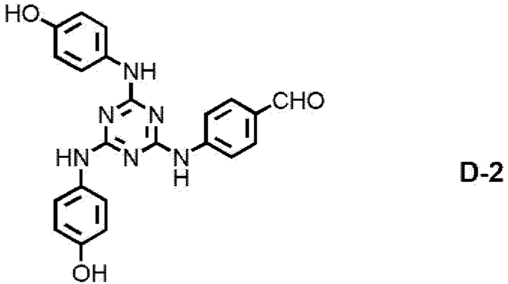

The following compound was used as the surface modifier for aluminum oxide (organic silane molecule).

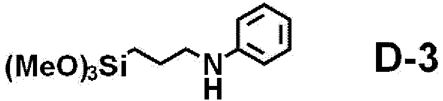

### <Solvent>

Cyclopentanone was used as the solvent.

### [Preparation of composition]

A curing liquid was prepared by formulating the epoxy compound and the phenolic compound of each combination shown in Table 1 below.

The total amount of the obtained curing liquid, the solvent, the dispersant, the surface modifier (the surface modifier for aluminum oxide and the surface modifier for an inorganic nitride), and the curing accelerator were mixed in this order, and then the inorganic substances (the inorganic nitride and the inorganic oxide) were added thereto. The obtained mixture was treated for 5 minutes with a rotating and revolving mixer (manufactured by THINKY CORPORATION, AWATORI RENTARO ARE-310) to obtain a composition (composition for forming a thermally conductive material) of each Example or Comparative Example.

Here, the addition amount of the solvent was set such that the concentration of the solid contents in the composition was 50% to 80% by mass.

Furthermore, the concentration of the solid contents in the composition was adjusted for each composition within the above range so that the viscosities of the compositions were about the same.

Moreover, the inorganic substances were used after being mixed so that a ratio (mass ratio) between contents of the respective inorganic substances satisfied a relationship shown in Table 1.

The formulation of the solid contents in the composition of each Example or Comparative Example is shown in Table 1.

### [Evaluation]

### <Thermally conductive properties>

The prepared composition was uniformly applied onto a release surface of a release-treated polyester film (NP-100A, manufactured by PANAC CO., LTD., film thickness of 100 µm) by using an applicator, and left to stand at 120°C for 5 minutes to obtain a coating film.

Two polyester films with such a coating film were prepared, and after laminating the coating film surfaces with each other, two polyester films with a coating film were hot-pressed (treated for 1 minute at a hot plate temperature of 65°C and a pressure of 12 MPa) in the air to obtain a semi-cured film. The obtained semi-cured film was treated with a hot press (treated for 20 minutes at a hot plate temperature of 160°C and a pressure of 12 MPa, and then for 90 minutes at 180°C and a normal pressure) in the air to cure the coating film, thereby obtaining a resin sheet. The polyester films on both surfaces of the resin sheet were peeled off to obtain a thermally conductive sheet (sheet-shaped thermally conductive material) having an average film thickness of 200 µm.

The evaluation of thermally conductive properties was performed using each thermally conductive sheet formed of each composition. The thermal conductivity was measured by the following method, and the thermally conductive properties were evaluated according to the following standards.

### (Measurement of thermal conductivity (W/m·k))

(1) By using "LFA 467" manufactured by NETZSCH, the thermal diffusivity of the thermally conductive sheet in a thickness direction was measured through a laser flash method.
(2) By using a balance "XS204" manufactured by METTLER TOLEDO, the specific gravity of the thermally conductive sheet was measured through an Archimedes method ("solid specific gravity measuring kit" was used).
(3) By using "DSC320/6200" manufactured by Seiko Instruments Inc., the specific heat of the thermally conductive sheet at 25°C was determined under a temperature rising condition of 10 °C/min.
(4) The thermal conductivity of the thermally conductive sheet was calculated by multiplying the obtained thermal diffusivity by the specific gravity and the specific heat.

### (Evaluation standards)

The measured thermal conductivity was classified according to the following standards, and used as the evaluation of the thermally conductive properties.
"A+": 15 W/m·K or greater
"A": 10 W/m·K or greater and less than 15 W/m·K
"B": 8 W/m·K or greater and less than 10 W/m·K
"C": 5 W/m·K or greater and less than 8 W/m·K
"D": Less than 5 W/m·K

The results are shown in Table 1.

### <Insulating properties>

A volume resistance value of a thermally conductive sheet, which was prepared in the same manner as in the evaluation of "Thermally conductive properties", at 23°C and a relative humidity of 65% was measured using a HIRESTA MCP-HT450 type (manufactured by Nittoseiko Analytech Co., Ltd.).

### (Evaluation standards)

The measured volume resistance value of the thermally conductive sheet was classified according to the following standards, and the insulating properties were evaluated.
"A": 10¹⁴ Ω·cm or greater
"B": 10¹² Ω·cm or greater and less than 10¹⁴ Ω·cm
"C": 10¹⁰ Ω·cm or greater and less than 10¹² Ω·cm
"D": Less than 10¹⁰ Ω·cm

### <Adhesiveness>

A tensile shear test based on JIS K 6850 was performed using copper plates as adherends and the composition as an adhesive.

Moreover, a test specimen was prepared by laminating two copper plates (size: 100 mm × 25 mm × 0.3 mm) with each other with an adhesion area of 12.5 mm × 25 mm.

The curing conditions of the composition were the same as those in a case where the thermally conductive sheet was prepared in the measurement of the thermally conductive properties.

For the test, TENSILON UNIVERSAL MATERIAL TESTING INSTRUMENT RTc-1225A was used, and a tensile rate was 0.05 mm/s.

### (Evaluation standards)

The measured breaking stress was classified according to the following standards, and the adhesiveness was evaluated.
"A": 5 MPa or greater
"B": 4 MPa or greater and less than 5 MPa
"C": Less than 4 MPa

### [Results]

Table 1 will be shown below.

In Table 1, a column of "Content (%)" indicates the content (% by mass) of each component with respect to the total solid content.

A column of "p" indicates the value of p in a case where the phenolic compound in the composition of Example is applied to General Formula (1).

A column of "q" indicates the value of q in a case where the phenolic compound in the composition of Example is applied to General Formula (1). Here, in a case where the phenolic compound does not have the group represented by General Formula (2), it is described as "-".

A column of "p + q" indicates the total value of the aforementioned "p" and "q". Here, in a case where the phenolic compound does not have the group represented by General Formula (2), it is described as "-".

**[Table 1]**

| Table 1 | Formulation of solid content in composition | | | | | | | | | | | | | | | Evaluation | | |
|---|---|---|---|---|---|---|---|---|---|---|---|---|---|---|---|---|---|---|
| | Organic solid content | | | | | | | | | | | | | Inorganic substance | | Thermal conductivity | Insulating properties | Adhesiveness |
| | Phenolic compound | | | | | | Epoxy compound | | Dispersant | Curing accelerator | | Surface modifier | | | | | | |
| | Kind | p | q | p + q | Number-average molecular weight | Content (%) | Kind | Content (%) | Content (%) | Kind | Content (%) | Kind | Content (%) | Kind (Mass ratio in inorganic substance) | Content (%) | | | |
| Example 1 | A-1 | 3 | - | - | 470 | 4.7 | B-1 | 18.3 | 0.15 | E-1 | 0.23 | | | Only HP-40 MF100 | 76.62 | A | A | A |
| Example 2 | A-1 | 3 | - | - | 470 | 5.0 | B-2 | 18.0 | 0.15 | E-1 | 0.23 | | | Only HP-40 MF100 | 76.62 | A | A | A |
| Example 3 | A-1 | 3 | - | - | 470 | 6.6 | B-3 | 16.4 | 0.15 | E-1 | 0.23 | | | Only HP-40 MF100 | 76.62 | A | A | A |
| Example 4 | A-1 | 3 | - | - | 470 | 7.1 | B-4 | 15.9 | 0.15 | E-1 | 0.23 | | | Only HP-40 MF100 | 76.62 | A | A | A |
| Example 5 | A-2 | 3 | - | - | 400 | 4.7 | B-1 | 18.3 | 0.15 | E-1 | 0.23 | | | Only HP-40 MF100 | 76.62 | A+ | A | A |
| Example 6 | A-2 | 3 | - | - | 400 | 5.0 | B-2 | 18.0 | 0.15 | E-1 | 0.23 | | | Only HP-40 MF100 | 76.62 | A+ | A | A |
| Example 7 | A-2 | 3 | - | - | 400 | 6.6 | B-3 | 16.4 | 0.15 | E-1 | 0.23 | | | Only HP-40 MF100 | 76.62 | A+ | A | A |
| Example 8 | A-2 | 3 | - | - | 400 | 7.1 | B-4 | 15.9 | 0.15 | E-1 | 0.23 | | | Only HP-40 MF100 | 76.62 | A+ | A | A |
| Example 9 | A-3 | 3 | 3 | 6 | 388 | 4.5 | B-1 | 18.5 | 0.15 | E-1 | 0.23 | | | Only HP-40 MF100 | 76.62 | A+ | A | A |
| Example 10 | A-3 | 3 | 3 | 6 | 388 | 4.8 | B-2 | 18.2 | 0.15 | E-1 | 0.23 | | | Only HP-40 MF100 | 76.62 | A+ | A | A |
| Example 11 | A-3 | 3 | 3 | 6 | 388 | 6.4 | B-3 | 16.6 | 0.15 | E-1 | 0.23 | | | Only HP-40 MF100 | 76.62 | A+ | A | A |
| Example 12 | A-3 | 3 | 3 | 6 | 388 | 6.9 | B-4 | 16.1 | 0.15 | E-1 | 0.23 | | | Only HP-40 MF100 | 76.62 | A+ | A | A |
| Example 13 | A-4 | 3 | 3 | 6 | 388 | 4.5 | B-1 | 18.5 | 0.15 | E-1 | 0.23 | | | Only HP-40 MF100 | 76.62 | A+ | A | A |
| Example 14 | A-4 | 3 | 3 | 6 | 388 | 4.8 | B-2 | 18.2 | 0.15 | E-1 | 0.23 | | | Only HP-40 MF100 | 76.62 | A+ | A | A |
| Example 15 | A-4 | 3 | 3 | 6 | 388 | 6.4 | B-3 | 16.6 | 0.15 | E-1 | 0.23 | | | Only HP-40 MF100 | 76.62 | A+ | A | A |
| Example 16 | A-4 | 3 | 3 | 6 | 388 | 6.9 | B-4 | 16.1 | 0.15 | E-1 | 0.23 | | | Only HP-40 MF100 | 76.62 | A+ | A | A |
| Example 17 | A-5 | 3 | 2 | 5 | 372 | 4.8 | B-1 | 18.2 | 0.15 | E-1 | 0.23 | | | Only HP-40 MF100 | 76.62 | A+ | A | A |
| Example 18 | A-5 | 3 | 2 | 5 | 372 | 5.1 | B-2 | 17.9 | 0.15 | E-1 | 0.23 | | | Only HP-40 MF100 | 76.62 | A+ | A | A |
| Example 19 | A-5 | 3 | 2 | 5 | 372 | 6.8 | B-3 | 16.2 | 0.15 | E-1 | 0.23 | | | Only HP-40 MF100 | 76.62 | A+ | A | A |
| Example 20 | A-5 | 3 | 2 | 5 | 372 | 7.3 | B-4 | 15.7 | 0.15 | E-1 | 0.23 | | | Only HP-40 MF100 | 76.62 | A+ | A | A |
| Example 21 | A-6 | 3 | 2 | 5 | 372 | 4.8 | B-1 | 18.2 | 0.15 | E-1 | 0.23 | | | Only HP-40 MF100 | 76.62 | A+ | A | A |
| Example 22 | A-6 | 3 | 2 | 5 | 372 | 5.1 | B-2 | 17.9 | 0.15 | E-1 | 0.23 | | | Only HP-40 MF100 | 76.62 | A+ | A | A |
| Example 23 | A-6 | 3 | 2 | 5 | 372 | 6.8 | B-3 | 16.2 | 0.15 | E-1 | 0.23 | | | Only HP-40 MF100 | 76.62 | A+ | A | A |
| Example 24 | A-6 | 3 | 2 | 5 | 372 | 7.3 | B-4 | 15.7 | 0.15 | E-1 | 0.23 | | | Only HP-40 MF100 | 76.62 | A+ | A | A |
| Example 25 | A-7 | 3 | 2 | 5 | 500 | 4.9 | B-1 | 18.1 | 0.15 | E-1 | 0.23 | | | Only HP-40 MF100 | 76.62 | A | A | A |
| Example 26 | A-7 | 3 | 2 | 5 | 500 | 5.2 | B-2 | 17.8 | 0.15 | E-1 | 0.23 | | | Only HP-40 MF100 | 76.62 | A | A | A |
| Example 27 | A-7 | 3 | 2 | 5 | 500 | 6.9 | B-3 | 16.1 | 0.15 | E-1 | 0.23 | | | Only HP-40 MF100 | 76.62 | A | A | A |
| Example 28 | A-7 | 3 | 2 | 5 | 500 | 7.4 | B-4 | 15.6 | 0.15 | E-1 | 0.23 | | | Only HP-40 MF100 | 76.62 | A | A | A |
| Example 29 | A-8 | 3 | 1 | 4 | 356 | 5.1 | B-1 | 17.9 | 0.15 | E-1 | 0.23 | | | Only HP-40 MF100 | 76.62 | A+ | A | A |
| Example 30 | A-8 | 3 | 1 | 4 | 356 | 5.5 | B-2 | 17.5 | 0.15 | E-1 | 0.23 | | | Only HP-40 MF100 | 76.62 | A+ | A | A |
| Example 31 | A-8 | 3 | 1 | 4 | 356 | 7.2 | B-3 | 15.8 | 0.15 | E-1 | 0.23 | | | Only HP-40 MF100 | 76.62 | A+ | A | A |
| Example 32 | A-8 | 3 | 1 | 4 | 356 | 7.7 | B-4 | 15.3 | 0.15 | E-1 | 0.23 | | | Only HP-40 MF100 | 76.62 | A+ | A | A |
| Example 33 | A-9 | 3 | 1 | 4 | 356 | 5.1 | B-1 | 17.9 | 0.15 | E-1 | 0.23 | | | Only HP-40 MF100 | 76.62 | A+ | A | A |
| Example 34 | A-9 | 3 | 1 | 4 | 356 | 5.5 | B-2 | 17.5 | 0.15 | E-1 | 0.23 | | | Only HP-40 MF100 | 76.62 | A+ | A | A |
| Example 35 | A-9 | 3 | 1 | 4 | 356 | 7.2 | B-3 | 15.8 | 0.15 | E-1 | 0.23 | | | Only HP-40 MF100 | 76.62 | A+ | A | A |
| Example 36 | A-9 | 3 | 1 | 4 | 356 | 7.7 | B-4 | 15.3 | 0.15 | E-1 | 0.23 | | | Only HP-40 MF100 | 76.62 | A+ | A | A |
| Example 37 | A-10 | 2 | 3 | 5 | 356 | 5.1 | B-1 | 17.9 | 0.15 | E-1 | 0.23 | | | Only HP-40 MF100 | 76.62 | A | A | A |
| Example 38 | A-10 | 2 | 3 | 5 | 356 | 5.5 | B-2 | 17.5 | 0.15 | E-1 | 0.23 | | | Only HP-40 MF100 | 76.62 | A | A | A |
| Example 39 | A-10 | 2 | 3 | 5 | 356 | 7.2 | B-3 | 15.8 | 0.15 | E-1 | 0.23 | | | Only HP-40 MF100 | 76.62 | A | A | A |
| Example 40 | A-10 | 2 | 3 | 5 | 356 | 7.7 | B-4 | 15.3 | 0.15 | E-1 | 0.23 | | | Only HP-40 MF100 | 76.62 | A | A | A |
| Example 41 | A-11 | 2 | 2 | 4 | 340 | 5.6 | B-1 | 17.4 | 0.15 | E-1 | 0.23 | | | Only HP-40 MF100 | 76.62 | A | A | A |
| Example 42 | A-11 | 2 | 2 | 4 | 340 | 5.9 | B-2 | 17.1 | 0.15 | E-1 | 0.23 | | | Only HP-40 MF100 | 76.62 | A | A | A |
| Example 43 | A-11 | 2 | 2 | 4 | 340 | 7.8 | B-3 | 15.2 | 0.15 | E-1 | 0.23 | | | Only HP-40 MF100 | 76.62 | A | A | A |
| Example 44 | A-11 | 2 | 2 | 4 | 340 | 8.3 | B-4 | 14.7 | 0.15 | E-1 | 0.23 | | | Only HP-40 MF100 | 76.62 | A | A | A |
| Example 45 | A-12 | 2 | 2 | 4 | 460 | 5.6 | B-1 | 17.4 | 0.15 | E-1 | 0.23 | | | Only HP-40 MF100 | 76.62 | A | A | B |
| Example 46 | A-12 | 2 | 2 | 4 | 460 | 6.0 | B-2 | 17.0 | 0.15 | E-1 | 0.23 | | | Only HP-40 MF100 | 76.62 | A | A | B |
| Example 47 | A-12 | 2 | 2 | 4 | 460 | 7.8 | B-3 | 15.2 | 0.15 | E-1 | 0.23 | | | Only HP-40 MF100 | 76.62 | A | A | B |
| Example 48 | A-12 | 2 | 2 | 4 | 460 | 8.3 | B-4 | 14.7 | 0.15 | E-1 | 0.23 | | | Only HP-40 MF100 | 76.62 | A | A | B |
| Example 49 | A-13 | 2 | 1 | 3 | 324 | 6.2 | B-1 | 16.8 | 0.15 | E-1 | 0.23 | | | Only HP-40 MF100 | 76.62 | A | A | B |
| Example 50 | A-13 | 2 | 1 | 3 | 324 | 6.5 | B-2 | 16.5 | 0.15 | E-1 | 0.23 | | | Only HP-40 MF100 | 76.62 | A | A | B |

**[Table 2]**

| Table 1 (continued) | Formulation of solid content in composition | | | | | | | | | | | | | | | Evaluation | | |
|---|---|---|---|---|---|---|---|---|---|---|---|---|---|---|---|---|---|---|
| | Organic solid content | | | | | | | | | | | | | Inorganic substance | | Thermal conductivity | Insulating properties | Adhesiveness |
| | Phenolic compound | | | | | | Epoxy compound | | Dispersant | Curing accelerator | | Surface modifier | | | | | | |
| | Kind | p | q | p + q | Number-average molecular weight | Content (%) | Kind | Content (%) | Content (%) | Kind | Content (%) | Kind | Content (%) | Kind (Mass ratio in inorganic substance) | Content (%) | | | |
| Example 51 | A-13 | 2 | 1 | 3 | 324 | 8.5 | B-3 | 14.5 | 0.15 | E-1 | 0.23 | | | Only HP-40 MF100 | 76.62 | A | A | B |
| Example 52 | A-13 | 2 | 1 | 3 | 324 | 9.0 | B-4 | 14.0 | 0.15 | E-1 | 0.23 | | | Only HP-40 MF100 | 76.62 | A | A | B |
| Example 53 | A-3 | 3 | 3 | 6 | 388 | 4.5 | B-1 | 18.5 | 0.15 | E-1 | 0.23 | D-1 | 0.23 | Only HP-40 MF100 | 76.39 | A+ | A | A |
| Example 54 | A-3 | 3 | 3 | 6 | 388 | 4.8 | B-2 | 18.2 | 0.15 | E-1 | 0.23 | D-1 | 0.23 | Only HP-40 MF100 | 76.39 | A+ | A | A |
| Example 55 | A-3 | 3 | 3 | 6 | 388 | 6.4 | B-3 | 16.6 | 0.15 | E-1 | 0.23 | D-1 | 0.23 | Only HP-40 MF100 | 76.39 | A+ | A | A |
| Example 56 | A-3 | 3 | 3 | 6 | 388 | 6.9 | B-4 | 16.1 | 0.15 | E-1 | 0.23 | D-1 | 0.23 | Only HP-40 MF100 | 76.39 | A+ | A | A |
| Example 57 | A-3 | 3 | 3 | 6 | 388 | 4.5 | B-1 | 18.5 | 0.15 | E-1 | 0.23 | D-2 | 0.23 | Only HP-40 MF100 | 76.39 | A+ | A | A |
| Example 58 | A-3 | 3 | 3 | 6 | 388 | 4.8 | B-2 | 18.2 | 0.15 | E-1 | 0.23 | D-2 | 0.23 | Only HP-40 MF100 | 76.39 | A+ | A | A |
| Example 59 | A-3 | 3 | 3 | 6 | 388 | 6.4 | B-3 | 16.6 | 0.15 | E-1 | 0.23 | D-2 | 0.23 | Only HP-40 MF100 | 76.39 | A+ | A | A |
| Example 60 | A-3 | 3 | 3 | 6 | 388 | 6.9 | B-4 | 16.1 | 0.15 | E-1 | 0.23 | D-2 | 0.23 | Only HP-40 MF100 | 76.39 | A+ | A | A |
| Example 61 | A-11 | 2 | 2 | 4 | 340 | 5.6 | B-1 | 17.4 | 0.15 | E-1 | 0.23 | D-1 | 0.23 | Only HP-40 MF100 | 76.39 | A+ | A | A |
| Example 62 | A-11 | 2 | 2 | 4 | 340 | 5.9 | B-2 | 17.1 | 0.15 | E-1 | 0.23 | D-1 | 0.23 | Only HP-40 MF100 | 76.39 | A+ | A | A |
| Example 63 | A-11 | 2 | 2 | 4 | 340 | 7.8 | B-3 | 15.2 | 0.15 | E-1 | 0.23 | D-1 | 0.23 | Only HP-40 MF100 | 76.39 | A+ | A | A |
| Example 64 | A-11 | 2 | 2 | 4 | 340 | 8.3 | B-4 | 14.7 | 0.15 | E-1 | 0.23 | D-1 | 0.23 | Only HP-40 MF100 | 76.39 | A+ | A | A |
| Example 65 | A-11 | 2 | 2 | 4 | 340 | 5.6 | B-1 | 17.4 | 0.15 | E-1 | 0.23 | D-2 | 0.23 | Only HP-40 MF100 | 76.39 | A+ | A | A |
| Example 66 | A-11 | 2 | 2 | 4 | 340 | 5.9 | B-2 | 17.1 | 0.15 | E-1 | 0.23 | D-2 | 0.23 | Only HP-40 MF100 | 76.39 | A+ | A | A |
| Example 67 | A-11 | 2 | 2 | 4 | 340 | 7.8 | B-3 | 15.2 | 0.15 | E-1 | 0.23 | D-2 | 0.23 | Only HP-40 MF100 | 76.39 | A+ | A | A |
| Example 68 | A-11 | 2 | 2 | 4 | 340 | 8.3 | B-4 | 14.7 | 0.15 | E-1 | 0.23 | D-2 | 0.23 | Only HP-40 MF100 | 76.39 | A+ | A | A |
| Example 69 | A-3 | 3 | 3 | 6 | 388 | 4.5 | B-1 | 18.5 | 0.15 | E-2 | 0.23 | | | Only HP-40 MF100 | 76.62 | A+ | A | A |
| Example 70 | A-3 | 3 | 3 | 6 | 388 | 4.8 | B-2 | 18.2 | 0.15 | E-2 | 0.23 | | | Only HP-40 MF100 | 76.62 | A+ | A | A |
| Example 71 | A-3 | 3 | 3 | 6 | 388 | 6.4 | B-3 | 16.6 | 0.15 | E-2 | 0.23 | | | Only HP-40 MF100 | 76.62 | A+ | A | A |
| Example 72 | A-3 | 3 | 3 | 6 | 388 | 6.9 | B-4 | 16.1 | 0.15 | E-2 | 0.23 | | | Only HP-40 MF100 | 76.62 | A+ | A | A |
| Example 73 | A-3 | 3 | 3 | 6 | 388 | 4.5 | B-1 | 18.5 | 0.15 | E-3 | 0.23 | | | Only HP-40 MF100 | 76.62 | A+ | A | A |
| Example 74 | A-3 | 3 | 3 | 6 | 388 | 4.8 | B-2 | 18.2 | 0.15 | E-3 | 0.23 | | | Only HP-40 MF100 | 76.62 | A+ | A | A |
| Example 75 | A-3 | 3 | 3 | 6 | 388 | 6.4 | B-3 | 16.6 | 0.15 | E-3 | 0.23 | | | Only HP-40 MF100 | 76.62 | A+ | A | A |
| Example 76 | A-3 | 3 | 3 | 6 | 388 | 6.9 | B-4 | 16.1 | 0.15 | E-3 | 0.23 | | | Only HP-40 MF100 | 76.62 | A+ | A | A |
| Example 77 | A-3 | 3 | 3 | 6 | 388 | 4.5 | B-1 | 18.5 | 0.15 | E-1 | 0.23 | D-3 | 0.08 | HP-40 MF100/AA-3/AA-04 = 47/40/13 | 76.54 | A | A | A |
| Example 78 | A-3 | 3 | 3 | 6 | 388 | 4.8 | B-2 | 18.2 | 0.15 | E-1 | 0.23 | D-3 | 0.08 | HP-40 MF100/AA-3/AA-04 = 47/40/13 | 76.54 | A | A | A |
| Example 79 | A-3 | 3 | 3 | 6 | 388 | 6.4 | B-3 | 16.6 | 0.15 | E-1 | 0.23 | D-3 | 0.08 | HP-40 MF100/AA-3/AA-04 = 47/40/13 | 76.54 | A | A | A |
| Example 80 | A-3 | 3 | 3 | 6 | 388 | 6.9 | B-4 | 16.1 | 0.15 | E-1 | 0.23 | D-3 | 0.08 | HP-40 MF100/AA-3/AA-04 = 47/40/13 | 76.54 | A | A | A |
| Comparative Example 1 | C-1 | | | | 292 | 8.6 | B-2 | 14.4 | 0.15 | E-1 | 0.23 | | | Only HP-40 MF100 | 76.62 | C | C | C |
| Comparative Example 2 | C-2 | | | | 600 | 6.1 | B-2 | 16.9 | 0.15 | E-1 | 0.23 | | | Only HP-40 MF100 | 76.62 | C | B | B |

From the results shown in the tables, it was confirmed that with the composition according to the embodiment of the present invention, a thermally conductive material having excellent thermally conductive properties can be obtained. Moreover, it was confirmed that the aforementioned thermally conductive material also has excellent insulating properties and adhesiveness.

Furthermore, it was confirmed that in a case where p in General Formula (1) is 3 or greater, the thermally conductive properties of the obtained thermally conductive material are superior.

### (Results of Examples 37 to 52, and the like)

It was confirmed that in a case where the number-average molecular weight of the phenolic compound represented by General Formula (1) is 420 or less, the thermally conductive properties or adhesiveness of the obtained thermally conductive material is superior.

### (Comparison between Examples 1 to 4 and 25 to 28 and Examples 5 to 24 and 29 to 36 (comparison under conditions in which p ≥ 3 in General Formula (1)), comparison between Examples 37 to 44 and Examples 45 to 48 (comparison under conditions in which p = 2 and p + q ≥ 4 in General Formula (1)), and the like)

In addition, it was confirmed that in a case where, in General Formula (1), at least one of R¹, ..., or R³ is the group represented by General Formula (2), and p + q is an integer of 4 or greater, the adhesiveness of the obtained thermally conductive material is superior.

### (Comparison between Examples 37 to 44 and Examples 49 to 52 (comparison under conditions in which p = 2 in General Formula (1) and the number-average molecular weight is 420 or less), and the like)

It was confirmed that in a case where the content of the inorganic nitride in the composition is 50% by mass or greater with respect to the total mass of the inorganic substances, the thermally conductive properties of the obtained thermally conductive material are superior.

### (Comparison between Examples 77 to 80 and Examples 9 to 12, and the like)

It was confirmed that in a case where the composition contains the surface modifier for an inorganic nitride, the thermally conductive properties of the obtained thermally conductive material are superior. (Comparison between Examples 41 to 44 and Examples 61 to 68, and the like)

## Claims

1. A composition comprising:
a phenolic compound represented by General Formula (1);
an epoxy compound; and
an inorganic substance,
wherein the inorganic substance includes at least one of an inorganic nitride selected from boron nitride and an inorganic oxide selected from aluminum oxide, 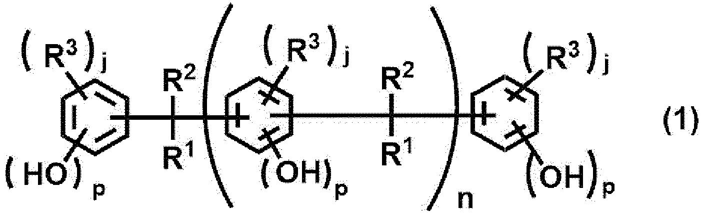
in General Formula (1), R¹ and R² each independently represent a hydrogen atom, an alkyl group which may have a substituent, an aralkyl group which may have a substituent, or a group represented by General Formula (2),
R³ represents an alkyl group which may have a substituent, an aralkyl group which may have a substituent, or a group represented by General Formula (2),
n represents an integer of 0 or greater,
j represents an integer of 0 or greater,
p represents an integer of 2 or greater, and
here, a value of j + p in -(R³)ⱼ and -(OH)ₚ bonded to the same benzene ring group is an integer of 2 to 4; 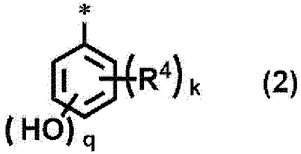
in General Formula (2), * represents a bonding position,
R⁴ represents an alkyl group which may have a substituent, an aralkyl group which may have a substituent, or an aryl group which may have a substituent,
k represents an integer of 0 or greater,
q represents an integer of 0 or greater, and
here, k + q is an integer of 0 to 5; and
in a case where R¹ to R³, which may each be present in a plurality of numbers, in General Formula (1) all represent a group other than a group represented by General Formula (2) in which q is an integer of 1 or greater, p in General Formula (1) is an integer of 3 or greater.

2. The composition according to claim 1,
wherein p represents an integer of 3 or greater.

3. The composition according to claim 1 or 2,
wherein a number-average molecular weight of the phenolic compound represented by General Formula (1) is 420 or less based on a polystyrene-equivalent value obtained by gel permeation chromatography measurement.

4. The composition according to any one of claims 1 to 3,
wherein in a case where at least one of R¹ to R³, which may each be present in a plurality of numbers, is the group represented by General Formula (2), the sum of an average value of a plurality of p's and an average value of q's which may be present in a plurality of numbers is 4 or greater.

5. The composition according to any one of claims 1 to 4,
wherein an epoxy group content of the epoxy compound is 4.0 mmol/g or greater.

6. The composition according to any one of claims 1 to 5,
wherein a content of the inorganic nitride is 50% by mass or greater with respect to a total mass of the inorganic substance.

7. The composition according to any one of claims 1 to 6, further comprising a surface modifier for the inorganic substance.

8. The composition according to any one of claims 1 to 7, further comprising a curing accelerator.

9. A thermally conductive material which is obtained by curing the composition according to any one of claims 1 to 8.

## Patentansprüche

1. Zusammensetzung, umfassend:
eine phenolische Verbindung, die durch allgemeine Formel (1) dargestellt wird;
eine Epoxyverbindung; und
eine anorganische Substanz,
wobei die anorganische Substanz mindestens eines von einem anorganischen Nitrid, das aus Bornitrid ausgewählt wird, und einem anorganischen Oxid, das aus Aluminiumoxid ausgewählt wird, enthält, 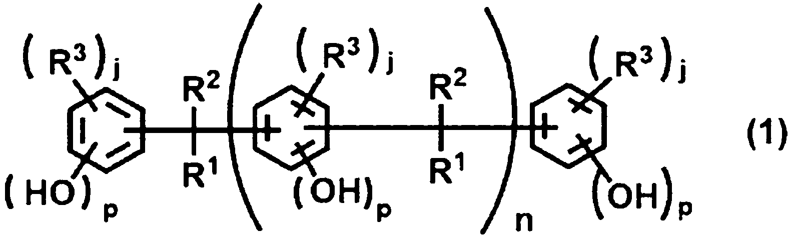
in allgemeiner Formel (1) R¹ und R² jeweils unabhängig voneinander ein Wasserstoffatom, eine Alkylgruppe, die einen Substituenten aufweisen kann, eine Aralkylgruppe, die einen Substituenten aufweisen kann, oder eine Gruppe, die durch allgemeine Formel (2) dargestellt wird, darstellen,
R³ eine Alkylgruppe, die einen Substituenten aufweisen kann, eine Aralkylgruppe, die einen Substituenten aufweisen kann, oder eine Gruppe, die durch allgemeine Formel (2) dargestellt wird, darstellt,
n eine ganze Zahl von 0 oder größer darstellt,
j eine ganze Zahl von 0 oder größer darstellt,
p eine ganze Zahl von 2 oder größer darstellt, und
hier ein Wert von j + p in -(R³)ⱼ und -(OH)ₚ, die an die gleiche Benzolringgruppe gebunden sind, eine ganze Zahl von 2 bis 4 ist; 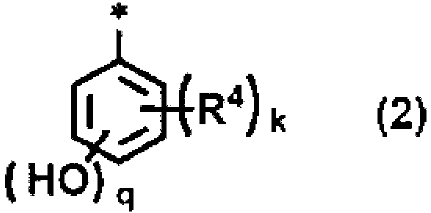
in allgemeiner Formel (2) * eine Bindungsposition darstellt,
R⁴ eine Alkylgruppe, die einen Substituenten aufweisen kann, eine Aralkylgruppe, die einen Substituenten aufweisen kann, oder eine Arylgruppe, die einen Substituenten aufweisen kann, darstellt,
k eine ganze Zahl von 0 oder größer darstellt,
q eine ganze Zahl von 0 oder größer darstellt, und
hier k + q eine ganze Zahl von 0 bis 5 ist; und
in einem Fall, in dem R¹ bis R³, die jeweils in mehreren Anzahlen vorhanden sein können, in allgemeiner Formel (1) alle eine Gruppe, die von einer Gruppe, die durch allgemeine Formel (2) dargestellt wird, in der q eine ganze Zahl von 1 oder größer ist, verschieden ist, darstellen, p in allgemeiner Formel (1) eine ganze Zahl von 3 oder größer ist.

2. Zusammensetzung nach Anspruch 1,
wobei p eine ganze Zahl von 3 oder größer darstellt.

3. Zusammensetzung nach Anspruch 1 oder 2,
wobei ein zahlenmittleres Molekulargewicht der durch allgemeine Formel (1) dargestellten phenolischen Verbindung 420 oder weniger auf der Grundlage eines Polystyrol-Äquivalentwerts, der durch Messung durch Gelpermeationschromatographie erhalten wird, beträgt.

4. Zusammensetzung nach einem der Ansprüche 1 bis 3,
wobei in einem Fall, in dem mindestens eines von R¹ bis R³, die jeweils in mehreren Anzahlen vorhanden sein können, die Gruppe, die durch allgemeine Formel (2) dargestellt wird, ist, die Summe eines Durchschnittswerts von mehreren p und eines Durchschnittswerts von q, die in mehreren Anzahlen vorhanden sein können, 4 oder größer ist.

5. Zusammensetzung nach einem der Ansprüche 1 bis 4,
wobei ein Epoxygruppen-Gehalt der Epoxyverbindung 4,0 mmol/g oder größer ist.

6. Zusammensetzung nach einem der Ansprüche 1 bis 5,
wobei ein Gehalt des anorganischen Nitrids 50 Massen-% oder größer in Bezug auf eine Gesamtmasse der anorganischen Substanz ist.

7. Zusammensetzung nach einem der Ansprüche 1 bis 6, ferner umfassend einen Oberflächenmodifikator für die anorganische Substanz.

8. Zusammensetzung nach einem der Ansprüche 1 bis 7, ferner umfassend einen Härtungskatalysator.

9. Wärmeleitendes Material, das durch Härtung der Zusammensetzung nach einem der Ansprüche 1 bis 8 erhalten wird.

## Revendications

1. Composition comprenant :
un composé phénolique représenté par Formule générale (1) ;
un composé époxy ; et
une substance inorganique,
dans laquelle la substance inorganique inclut au moins l'un d'un nitrure inorganique choisi parmi le nitrure de bore et d'un oxyde inorganique choisi parmi l'oxyde d'aluminium, 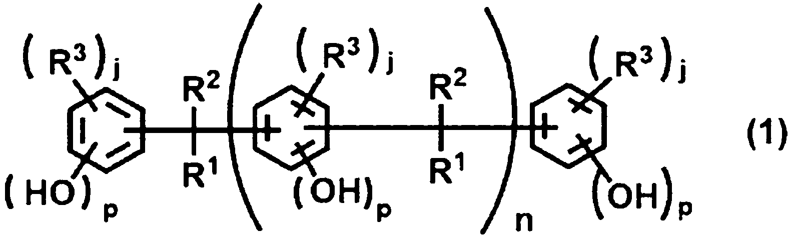
dans Formule générale (1), R¹ et R² représentent chacun indépendamment un atome d'hydrogène, un groupe alkyle qui peut avoir un substituant, un groupe aralkyle qui peut avoir un substituant ou un groupe représenté par Formule générale (2),
R³ représente un groupe alkyle qui peut avoir un substituant, un groupe aralkyle qui peut avoir un substituant ou un groupe représenté par Formule générale (2),
n représente un entier de 0 ou plus,
j représente un entier de 0 ou plus,
p représente un entier de 2 ou plus, et
ici, une valeur de j + p dans -(R³)ⱼ et -(OH)ₚ liés au même groupe de cycle benzénique est un entier de 2 à 4 ; 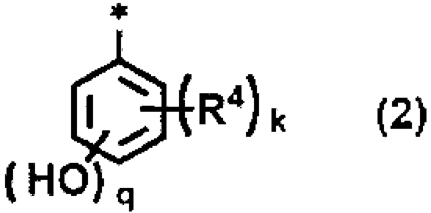
dans Formule générale (2), * représente une position de liaison,
R⁴ représente un groupe alkyle qui peut avoir un substituant, un groupe aralkyle qui peut avoir un substituant ou un groupe aryle qui peut avoir un substituant,
k représente un entier de 0 ou plus,
q représente un entier de 0 ou plus, et
ici, k + q est un entier de 0 à 5 ; et
dans un cas où R¹ à R³, qui peuvent chacun être présents en plusieurs exemplaires,
dans Formule générale (1) représentent tous un groupe autre qu'un groupe représenté par Formule générale (2) dans laquelle q est un entier de 1 ou plus, p dans Formule générale (1) est un entier de 3 ou plus.

2. Composition selon la revendication 1,
dans laquelle p représente un entier de 3 ou plus.

3. Composition selon la revendication 1 ou la revendication 2,
dans laquelle un poids moléculaire moyen en nombre du composé phénolique représenté par Formule générale (1) est de 420 ou moins sur la base d'une valeur équivalente au polystyrène obtenue par mesure de chromatographie par perméation de gel.

4. Composition selon l'une quelconque des revendications 1 à 3,
dans laquelle dans un cas où au moins l'un de R¹ à R³, qui peuvent chacun être présents en plusieurs exemplaires, est le groupe représenté par Formule générale (2), la somme d'une valeur moyenne d'une pluralité de p et d'une valeur moyenne de q qui peuvent être présents en plusieurs exemplaires est de 4 ou plus.

5. Composition selon l'une quelconque des revendications 1 à 4,
dans laquelle une teneur en groupes époxy du composé époxy est de 4,0 mmol/g ou plus.

6. Composition selon l'une quelconque des revendications 1 à 5,
dans laquelle une teneur du nitrure inorganique est de 50 % en masse ou plus par rapport à une masse totale de la substance inorganique.

7. Composition selon l'une quelconque des revendications 1 à 6, comprenant en outre un modificateur de surface pour la substance inorganique.

8. Composition selon l'une quelconque des revendications 1 à 7, comprenant en outre un accélérateur de durcissement.

9. Matériau thermiquement conducteur qui est obtenu par durcissement de la composition selon l'une quelconque des revendications 1 à 8.
